# EUROPEAN PATENT SPECIFICATION

(11) **EP 3 236 035 B1**
(45) Date of publication and mention of the grant of the patent: **01.07.2020**
(21) Application number: 15870100.3
(22) Date of filing: 18.12.2015
(51) Int. Cl.: F01N 3/24, F01N 3/20, F01N 3/28, F01N 11/00, F01N 13/00, F01N 13/08, F01N 13/10, B62M 7/02, F02D 41/14

(54) **STRADDLED VEHICLE**
GRÄTSCHSITZFAHRZEUG
VÉHICULE ENFOURCHÉ

(30) Priority: 19.12.2014 JP 2014256983; 19.12.2014 JP 2014256984; 19.12.2014 JP 2014256985; 06.04.2015 JP 2015077744; 07.08.2015 JP 2015157520
(43) Date of publication of application: 25.10.2017
(73) Proprietor: Yamaha Hatsudoki Kabushiki Kaisha, Iwata-shi, Shizuoka 438-8501 (JP)
(72) Inventor: TAKASU, Daisuke, Iwata-shi Shizuoka 438-8501 (JP); WAKIMURA, Makoto, Iwata-shi Shizuoka 438-8501 (JP); OKU, Yuji, Iwata-shi Shizuoka 438-8501 (JP); KOBAYASHI, Makoto, Iwata-shi Shizuoka 438-8501 (JP)
(74) Representative: Stöckeler, Ferdinand
(86) International application number: PCT/JP2015/085576
(87) International publication number: WO 2016/098901

(56) References cited:
- EP-A1- 2 031 200
- EP-A2- 1 749 987
- JP-A- 2006 281 858
- JP-A- 2007 023 802
- JP-A- 2008 190 505
- JP-A- 2008 190 505
- JP-A- 2009 156 249
- JP-A- 2010 209 815
- JP-A- 2010 209 815
- JP-A- 2010 269 725
- JP-A- 2014 137 001
- US-A1- 2014 237 991

## Description

### [Technical Field]

The present invention relates to a straddled vehicle.

### [Background Art]

A known straddled vehicle includes an engine unit with a plurality of combustion chambers. The combustion chambers are formed in an engine main body of the engine unit. The engine main body is connected to an exhaust passage member. Exhaust gas discharged from the engine main body flows into the exhaust passage member. The downstream end of the exhaust passage member is connected to a catalyst portion. A catalyst for purifying the exhaust gas is provided inside the catalyst portion.

The catalyst portion is, for example, provided straight or directly below the engine main body (see e.g., Patent Literature 1). The cross-sectional area of the catalyst portion is larger than that of the exhaust passage member. Each cross-sectional area is a cross-sectional area cut along the direction orthogonal to the flow direction of the exhaust gas. When the catalyst portion is provided straight below the engine main body, the catalyst portion is long in the up-down direction. Due to this, the seat or the like needs to be positioned higher to ensure a sufficient distance between the ground and the catalyst portion, with the result that the straddled vehicle is disadvantageously large in the up-down direction. According to Patent Literature 1, in order to solve this problem, the catalyst portion is arranged so that the length in the up-down direction is shorter than the length in the direction orthogonal to the up-down direction. In this way, increase in size of the catalyst portion in the up-down direction is restrained.

In addition to the above, the straddled vehicle significantly vibrates in the up-down direction. The catalyst which is a heavy member therefore also vibrates in the up-down direction. Due to this, a part supporting the catalyst portion is required to be strong enough to withstand the vibrations in the up-down direction. To put it differently, the strength for supporting the catalyst portion in the up-down direction must be sufficient. According to Patent Literature 1, the catalyst portion is directly supported by an under frame which is a part of a vehicle body frame. In this way, sufficient strength for supporting the catalyst portion in the up-down direction is obtained in Patent Literature 1. Furthermore, according to Patent Literature 1, the increase in size of the straddled vehicle in the up-down direction is restrained while a suitable distance between the ground and the catalyst portion is ensured, by suitably arranging the layout or shape of the catalyst.

### [Citation List]

### [Patent Literatures]

[Patent Literature 1] Japanese Unexamined Patent Publication No. 2010-269725
[Patent literatur 2] Also EP 1749 987 A2 discloses an exhaust system according to the state of the art.

### [Summary of Invention]

### [Technical Problem]

These days improvement in exhaust gas purification performance has been demanded for straddled vehicles. For this reason, catalysts tend to be increased in size. According to Patent Literature 1, a catalyst has already been arranged to be short in the up-down direction. Due to this, if the size of the catalyst is increased in the straddled vehicles of Patent Literature 1, it is difficult to keep the catalyst portion short in the up-down direction. It is therefore difficult to restrain the increase in size of the vehicle in the up-down direction while a suitable distance is ensured between the ground and the catalyst portion. Furthermore, when the catalyst is increased in size, the catalyst portion tends to vibrate in the up-down direction. As a result, it is difficult to achieve strength for supporting the catalyst portion in the up-down direction sufficient to withstand the vibrations of the catalyst portion in the up-down direction.

An object of the present invention is to provide a straddled vehicle in which the increase in size of the vehicle is restrained in an up-down direction and sufficient strength for supporting a catalyst portion in the up-down direction is obtained while exhaust gas purification performance by a catalyst is improved.

### [Solution to Problem and Advantageous Effects]

The inventors of the subject application studied a space for providing a catalyst portion, in order to restrain increase in size of a vehicle in an up-down direction due to the upsizing of a catalyst. As a result, the inventors conceived of utilizing a space between an engine main body and a front wheel unit. In other words, they tried to provide the upsized catalyst portion in front of the engine main body. However, being different from cases where the catalyst portion was provided straight below the engine main body, the vehicle body frame did not exist around the catalyst portion when the catalyst portion was provided in front of the engine main body. It was therefore difficult to directly support the catalyst portion. Due to this, it seemed to be difficult to achieve strength for supporting the catalyst portion sufficient to withstand the vibrations of the catalyst portion in the up-down direction.

Under this circumstance, the inventors of the subject application noticed that the engine main body included a plurality of combustion chambers. An exhaust port connected to an exhaust passage member was formed in the outer surface of the engine main body. The number of exhaust ports is identical to or smaller than the number of combustion chambers. When the number of exhaust ports is smaller than the number of combustion chambers, a plurality of exhaust passage members are merged inside the engine main body. When the number of exhaust ports is smaller than the number of combustion chambers, the cross-sectional area of each exhaust port is large. When the number of exhaust ports is identical to the number of combustion chambers, the total cross-sectional area of the exhaust ports is large. For this reason, in either case, the area of a part where the outer surface of the engine main body is connected to the exhaust passage member is large. When the area of the connecting part is large, it is possible to provide fixing tools such as bolts at long intervals. For this reason, when the area of the connecting part is large, the exhaust passage member is firmly attached to the engine main body. As such, the inventors of the subject application discovered that the exhaust passage member was firmly attached to the engine main body when the engine main body included a plurality of combustion chambers.

In addition to the above, the inventors of the subject application studied where the catalyst portion was provided by taking advantage of the exhaust passage member which was firmly attached to the engine main body. The inventors found that simply connecting the catalyst portion to the exhaust passage member was insufficient to achieve strength for supporting the catalyst portion in the up-down direction sufficient to withstand the vibrations of the catalyst portion in the up-down direction. When the catalyst portion was simply connected to the exhaust passage member, the linear distance between the exhaust port of the engine main body and the catalyst portion was long. In such a case, up-down movement about the exhaust port, which was exerted to the catalyst portion, was great when the vehicle vibrated in the up-down direction. The catalyst portion therefore easily vibrated in the up-down direction. Due to this, the inventors of the subject application conceived of shortening the linear distance between the exhaust port of the engine main body and the catalyst portion by modifying the shape of the exhaust passage member connecting the engine main body to the catalyst portion. When the catalyst portion was simply connected to the exhaust passage member, the distance between the center of the upstream end of the catalyst portion and the gravity center of the catalyst portion was long when viewed in the up-down direction. Furthermore, the distance between the center of the downstream end of the catalyst portion and the gravity center of the catalyst portion was long when viewed in the up-down direction. In such a case, up-down movement about the center of the upstream end or the downstream end of the catalyst portion, which was exerted to the catalyst portion, was great when the vehicle vibrated in the up-down direction. The catalyst portion therefore easily vibrated in the up-down direction. The inventors of the subject application therefore conceived of shortening the distance between the center of the upstream end of the catalyst portion and the gravity center of the catalyst portion when viewed in the up-down direction by modifying the shape of the exhaust passage member connected to the upstream end of the catalyst portion. The inventors of the subject application further conceived of shortening the distance between the center of the downstream end of the catalyst portion and the gravity center of the catalyst portion when viewed in the up-down direction by modifying the shape of the exhaust passage member connected to the downstream end of the catalyst portion.
The inventors found that the strength for supporting the catalyst in the up-down direction was sufficient, even when the catalyst was upsized, when the shape of the exhaust passage member was modified while taking advantage of the fact that the exhaust passage member was firmly attached to the engine main body. Based on this, the inventors found that the increase in size of the vehicle was restrained in the up-down direction and sufficient strength for supporting a catalyst portion in the up-down direction was obtained while exhaust gas purification performance by a catalyst was improved.
(1) A straddled vehicle of the present teaching includes the features of claim 1.
   According to the structure as claimed, the straddled vehicle includes the vehicle body frame, the engine unit, and the front wheel unit. Hereinafter, a left-right direction, a front-rear direction, and an up-down direction are a vehicle left-right direction, a vehicle front-rear direction, and a vehicle up-down direction, respectively. The engine unit is supported by the vehicle body frame. The front wheel unit includes at least one front wheel. The engine unit includes the engine main body and the exhaust device. The engine main body includes the cylinder holes and the combustion chambers. The cylinder holes are side by side in the left-right direction. The engine main body is supported by the vehicle body frame. The engine main body is provided behind the front wheel unit. The at least one exhaust port communicating with the combustion chambers is formed in the front surface of the engine main body. The exhaust device is connected to the at least one exhaust port of the engine main body. The exhaust device has the atmosphere discharge port for discharging the exhaust gas to the atmosphere. The exhaust device includes the catalyst portion, the upstream exhaust passage member, the downstream exhaust passage member, and the muffler member. The catalyst portion includes the main catalyst. In the exhaust paths from the combustion chambers to the at least one atmosphere discharge port, the main catalyst purifies the exhaust gas discharged from the combustion chambers most. The length in the flow direction of the exhaust gas of the catalyst portion is identical to the length in the flow direction of the exhaust gas of the main catalyst. The muffler member has the atmosphere discharge port. The muffler member is connected to the downstream end of the downstream exhaust passage member. The muffler member is configured to reduce noise generated by the exhaust gas.
   In the straddled vehicle structured as described above, when viewed in the left-right direction, at least a part of the catalyst portion is provided between the engine main body and the front wheel unit. The catalyst portion is provided so that the flow direction of the exhaust gas flowing therein is along the up-down direction. Due to this, the catalyst portion is provided by utilizing an empty space between the front surface of the engine main body and the rear surface of the front wheel unit. Due to this, even when the main catalyst is upsized to improve the exhaust gas purification performance, the increase in size of the vehicle in the up-down direction is restrained.
   The upstream end of the catalyst portion is connected to the downstream end of the upstream exhaust passage member. The upstream exhaust passage member is connected to the at least one exhaust port formed in the front surface of the engine main body. The at least one exhaust port communicates with the combustion chambers. For this reason, the area of a part where the front surface of the engine main body is connected to the upstream exhaust passage member is large. When the area of the connecting part is large, it is possible to provide fixing tools such as bolts at long intervals. The upstream exhaust passage member can therefore be firmly attached to the engine main body.
   The upstream exhaust passage member includes the upstream bended portion. The upstream bended portion changes the flow direction of the exhaust gas flowing therein, from the direction along the front-rear direction to the direction along the up-down direction. For this reason, the linear distance between the exhaust port of the engine main body and the catalyst portion is shortened. Due to this, it is possible to restrain the up-down movement about the engine main body exerted to the catalyst portion when the catalyst portion vibrates in the up-down direction. It is therefore possible to restrain the vibration of the catalyst portion in the up-down direction.
   The downstream end of the catalyst portion is connected to the upstream end of the downstream exhaust passage member. The downstream exhaust passage member includes a downstream bended portion. The downstream bended portion changes the flow direction of the exhaust gas flowing therein, from the direction along the up-down direction to the direction along the front-rear direction. Because the upstream bended portion and the downstream bended portion are provided, it is possible to provide the catalyst portion so that the flow direction of the exhaust gas flowing therein is along the up-down direction. With this arrangement, when viewed in the up-down direction, both the center of the upstream end and the center of the downstream end of the catalyst portion are close to the gravity center of the catalyst portion. It is therefore possible to reduce the up-down movement about the center of the upstream end or the downstream end of the catalyst portion, which is exerted to the catalyst portion, when the vehicle vibrates in the up-down direction. It is therefore possible to restrain the vibration of the catalyst portion in the up-down direction.
   As such, the vibration of the catalyst portion in the up-down direction is restrained thanks to the shape of the exhaust passage member, in addition to the fact that the upstream exhaust passage member is firmly attached to the engine main body. Due to this, even when the main catalyst is upsized, sufficient strength for supporting the catalyst portion in the up-down direction is obtained.
   For this reason, the increase in size of the vehicle is restrained in the up-down direction and sufficient strength for supporting the catalyst portion in the up-down direction is obtained while exhaust gas purification performance by the main catalyst is improved.
(2) The straddled vehicle of the present teaching preferably includes the following feature. The engine main body is disposed so that the central axis of each of the cylinder holes is along the up-down direction.
   According to this arrangement, the engine main body is provided so that the central axis of each of the cylinder holes is along the up-down direction. This makes it easy to provide the catalyst portion between the engine main body and the front wheel unit and arrange the flow direction of the exhaust gas in the catalyst portion to be along the up-down direction. It is therefore easy to provide the catalyst portion so that the up-down movement about the center of the upstream end or the downstream end of the catalyst portion, which is exerted to the catalyst portion, is reduced. It is therefore possible to further restrain the vibration of the catalyst portion in the up-down direction. Due to this, even when the main catalyst is further upsized, sufficient strength for supporting the catalyst portion in the up-down direction is obtained. For this reason, sufficient strength for supporting the catalyst portion in the up-down direction is obtained while exhaust gas purification performance by the main catalyst is further improved.
(3) The straddled vehicle of the present teaching preferably includes the following feature. The engine main body includes, at a front surface, a plurality of the at least one exhaust port which communicate with the combustion chambers, respectively.
   According to this arrangement, the exhaust ports communicating with the respective combustion chambers are formed in the front surface of the engine main body. The total aperture area of the exhaust ports is therefore large when compared to cases where only one exhaust port communicating with a plurality of combustion chambers is formed in the front surface of the engine main body. For this reason, the area of a part where the front surface of the engine main body is connected to the upstream exhaust passage member is large when compared to cases where only one exhaust port is formed in the front surface of the engine main body. The strength for supporting the catalyst portion in the up-down direction is high for this reason. Due to this, even when the main catalyst is further upsized, sufficient strength for supporting the catalyst portion in the up-down direction is obtained. For this reason, sufficient strength for supporting the catalyst portion in the up-down direction is obtained while exhaust gas purification performance by the main catalyst is further improved.
(4) The straddled vehicle of the present teaching preferably includes the following feature. The engine main body includes a crankshaft having a central axis which is along the left-right direction. The catalyst portion is provided forward of the central axis of the crankshaft in the front-rear direction.
(5) The straddled vehicle of the present teaching preferably includes the following features. The engine main body includes: a crankcase member which is provided at a lower part of the engine main body and includes the crankshaft; and a cylinder portion which is connected to an upper end portion of the crankcase member and includes the cylinder holes and the combustion chambers. At least a part of the catalyst portion is provided in front of the crankcase member in the front-rear direction.
   According to this arrangement, the engine main body includes the crankcase member and the cylinder portion. The crankcase member is provided at a lower part of the engine main body. The crankcase member includes the crankshaft. The cylinder portion is connected to an upper end portion of the crankcase member. The cylinder portion includes the cylinder holes and the combustion chambers. At least a part of the catalyst portion is provided in front of the crankcase member. This makes it easy to provide the catalyst portion between the engine main body and the front wheel unit and arrange the flow direction of the exhaust gas in the catalyst portion to be along the up-down direction. It is therefore easy to provide the catalyst portion so that the up-down movement about the center of the upstream end or the downstream end of the catalyst portion, which is exerted to the catalyst portion, is reduced. It is therefore possible to further restrain the vibration of the catalyst portion in the up-down direction. Due to this, even when the main catalyst is further upsized, sufficient strength for supporting the catalyst portion in the up-down direction is obtained. For this reason, sufficient strength for supporting the catalyst portion in the up-down direction is obtained while exhaust gas purification performance by the main catalyst is further improved.
(6) The straddled vehicle of the present teaching preferably includes the following feature. When viewed in the left-right direction, at least a part of the catalyst portion is provided in front in the front-rear direction of a linear line which is orthogonal to the central axis of the at least one cylinder hole and passes the central axis of the crankshaft.
   It is assumed that a linear line which is orthogonal to the central axis of the cylinder hole and passes the central axis of the crankshaft when viewed in the left-right direction is a linear line L. When viewed in the left-right direction, at least a part of the catalyst portion is provided in front of the linear line L. This makes it easy to provide the catalyst portion between the engine main body and the front wheel unit and arrange the flow direction of the exhaust gas in the catalyst portion to be along the up-down direction. It is therefore easy to provide the catalyst portion so that the up-down movement about the center of the upstream end or the downstream end of the catalyst portion, which is exerted to the catalyst portion, is reduced. It is therefore possible to further restrain the vibration of the catalyst portion in the up-down direction. Due to this, even when the main catalyst is further upsized, sufficient strength for supporting the catalyst portion in the up-down direction is obtained. For this reason, sufficient strength for supporting the catalyst portion in the up-down direction is obtained while exhaust gas purification performance by the main catalyst is further improved.
(7) The straddled vehicle of the present teaching preferably includes the following features. The upstream exhaust passage member is configured such that the upstream bended portion changes the flow direction of the exhaust gas flowing in the upstream bended portion from a direction along a forward direction to a direction along a downward direction. The downstream exhaust passage member is configured such that the downstream bended portion changes the flow direction of the exhaust gas flowing in the downward bended portion from a direction along a downward direction to a direction along a rearward direction.
(8) The straddled vehicle of the present teaching preferably includes the following feature. The exhaust device includes at least one downstream sub-catalyst which is provided in at least one of the downstream exhaust passage member and the muffler member, is provided downstream of the downstream bended portion in the flow direction of the exhaust gas, and is configured to purify the exhaust gas.
   According to this arrangement, the exhaust device includes at least one downstream sub-catalyst which is provided to purify the exhaust gas. The at least one downstream sub-catalyst is provided in at least one of the downstream exhaust passage member and the muffler member. With the downstream sub-catalyst, the main catalyst is downsized while the exhaust gas purification performance is maintained, when compared to cases where the downstream sub-catalyst is not provided. Due to this, the exhaust gas purification performance of the catalyst is improved while the increase in size of the vehicle in the front-rear direction is restrained. Furthermore, because the catalyst portion is short in the up-down direction, the exhaust gas purification performance of the catalyst is improved while the increase in size of the vehicle in the up-down direction is further restrained.
   The downstream sub-catalyst is provided downstream of the downstream bended portion in the flow direction of the exhaust gas. To put it differently, the downstream sub-catalyst is not provided at a part from the upstream end to the downstream bended portion of the downstream exhaust passage member. Due to this, the downstream exhaust passage member is not elongated in the up-down direction even when the downstream sub-catalyst is provided. The distance between the downstream exhaust passage member and the ground is therefore sufficient even when the downstream sub-catalyst is provided. Due to this, the exhaust gas purification performance of the catalyst is improved while the increase in size of the vehicle in the up-down direction is further restrained.
(9) The straddled vehicle of the present teaching preferably includes the following features. The engine main body includes at least one internal exhaust passage member connecting the combustion chambers to the at least one exhaust port. The exhaust device includes at least one upstream sub-catalyst which is provided in at least one of the at least one internal exhaust passage member and the upstream exhaust passage member, is provided upstream of the upstream bended portion in the flow direction of the exhaust gas, and is configured to purify the exhaust gas.
   According to this arrangement, the engine main body includes at least one internal exhaust passage member. The internal exhaust passage member connects the combustion chamber with the exhaust port. The exhaust device includes at least one upstream sub-catalyst which is provided to purify the exhaust gas. The at least one upstream sub-catalyst is provided in the at least one of the internal exhaust passage member and the upstream exhaust passage member. With the upstream sub-catalyst, the main catalyst is downsized while the exhaust gas purification performance is maintained, when compared to cases where the upstream sub-catalyst is not provided. Due to this, the exhaust gas purification performance of the catalyst is improved while the increase in size of the vehicle in the front-rear direction is restrained. Furthermore, because the catalyst portion is short in the up-down direction, the exhaust gas purification performance of the catalyst is improved while the increase in size of the vehicle in the up-down direction is further restrained.
   The upstream sub-catalyst is provided upstream of the upstream bended portion in the flow direction of the exhaust gas. To put it differently, the upstream sub-catalyst is not provided at a part from the upstream bended portion to the downstream end of the upstream exhaust passage member. Due to this, the upstream exhaust passage member is not elongated in the up-down direction even when the upstream sub-catalyst is provided. The distance between the upstream exhaust passage member and the ground is therefore sufficient even when the upstream sub-catalyst is provided. Due to this, the exhaust gas purification performance of the catalyst is improved while the increase in size of the vehicle in the up-down direction is further restrained.
(10) The straddled vehicle of the present teaching preferably includes the following feature. At least a part of the upstream exhaust passage member is formed of a multi-walled pipe which includes an inner pipe and at least one outer pipe covering the inner pipe.
   According to this arrangement, at least a part of the upstream exhaust passage member is formed of a multi-walled pipe. The multi-walled pipe includes an inner pipe and at least one outer pipe which covers the inner pipe. Because at least a part of the upstream exhaust passage member is formed of the multi-walled pipe, it is possible to restrain the decrease in temperature of the exhaust gas in the upstream exhaust passage member. As a result, at the cold start of the engine unit, the time required to activate the deactivated main catalyst is shortened. Due to this, the exhaust gas purification performance of the main catalyst is further improved. The cold start of the engine unit indicates that the engine unit is started in a state in which the temperature of the engine main body is equal to or lower than the outside temperature.
   Furthermore, because at least a part of the upstream exhaust passage member is formed of the multi-walled pipe, the strength of the upstream exhaust passage member is improved. It is therefore possible to further restrain the vibration of the catalyst portion in the up-down direction. Due to this, even when the main catalyst is further upsized, sufficient strength for supporting the catalyst portion in the up-down direction is obtained. For this reason, sufficient strength for supporting the catalyst portion in the up-down direction is obtained while exhaust gas purification performance by the main catalyst is further improved.
(11) The straddled vehicle of the present teaching preferably includes the following feature. The catalyst portion includes: a cylindrical part which houses the main catalyst and is connected to the downstream end of the upstream exhaust passage member and the upstream end of the downstream exhaust passage member; and a catalyst protector portion arranged to cover at least a part of the outer surface of the cylindrical part.
   According to this arrangement, the catalyst portion includes the main catalyst, the cylindrical part, and the catalyst protector portion. The cylindrical part houses the main catalyst. The cylindrical part is connected to the downstream end of the upstream exhaust passage member and the upstream end of the downstream exhaust passage member. The catalyst protector portion covers at least a part of the outer surface of the cylindrical part. When the catalyst protector portion is provided, the heat keeping effect of the main catalyst is improved. As a result, at the cold start of the engine unit, the time required to activate the deactivated main catalyst is further shortened. Due to this, the exhaust gas purification performance of the main catalyst is further improved.
(12) The straddled vehicle of the present teaching preferably includes the following features. The engine main body includes an oil filter at a front portion. When the exhaust device and the oil filter are viewed from the front side in the front-rear direction, the exhaust device and the oil filter are arranged so that at least a part of the oil filter is exposed.

According to this arrangement, the oil filter is provided at the front portion of the engine main body. When the exhaust device and the oil filter are viewed from the front side, at least a part of the oil filter is exposed. The oil filter is therefore easily detachable from the engine main body.

### [Brief Description of Drawings]

[FIG. 1] FIG. 1 is a right side view of a motorcycle of an embodiment.
[FIG. 2] FIG. 2 is a cross-section taken along a line II-II in FIG. 1.
[FIG. 3] FIG. 3 is a right side view of a part of an engine unit.
[FIG. 4] FIG. 4 is a front view of a part of the engine unit.
[FIG. 5] FIG. 5 is a schematic diagram of a part of the engine unit which is not covered by the present invention.
[FIG. 6] FIG. 6 is a schematic diagram of a part of the engine unit which is not covered by the present invention.
[FIG. 7] FIG. 7 is a cross-section of a muffler member which is not covered by the present invention.
[FIG. 8] FIG. 8 is a plan view of an exhaust device which is not covered by the present invention.
[FIG. 9] FIG. 9 is a right side view of a part of an engine unit of Modification 1 of an embodiment of the present invention.
[FIG. 10] FIG. 10 is a right side view of a part of an engine unit of Modification 2 which is not covered by the present invention.
[FIG. 11] FIG. 11 is a cross-section of a turbocharger of Modification 2 which is not covered by the present invention.
[FIG. 12] FIG. 12 is a side view of the turbocharger of Modification 2 which is not covered by the present invention.
[FIG. 13] FIG. 13 is a right side view of a part of an engine unit of a modification of an embodiment of the present invention.
[FIG. 14] FIG. 14 is a cross-section of a of an upstream exhaust passage member of another modification, said modification is covered by the present invention.
[FIG. 15] FIG. 15 is a plan view of a part of the engine unit of another modification which is not covered by the present invention.
[FIG. 16] FIG. 16 is a front view of a part of the engine unit of another modification of an embodiment of the present invention.

### [Description of Embodiments]

The following will describe an embodiment of the present invention. The present embodiment is an example in which a straddled vehicle of the present teaching is embodied as a sports-type motorcycle. Hereinafter, a front-rear direction is a vehicle front-rear direction for a rider seated on a below-described seat 9 of a motorcycle 1. A left-right direction is a vehicle left-right direction for the rider seated on the seat 9. The vehicle left-right direction is identical to a vehicle width direction. In each figure, arrows F and B indicate forward and backward, respectively, arrows L and R indicate leftward and rightward, respectively, and arrows U and D indicate upward and downward, respectively. The present embodiment is described based on the definition of terms described at the end of this specification. The same applies to later-described modifications wherein modification 1 is covered and modification 2 is not covered by the present invention.

### [Overall Structure of Motorcycle]

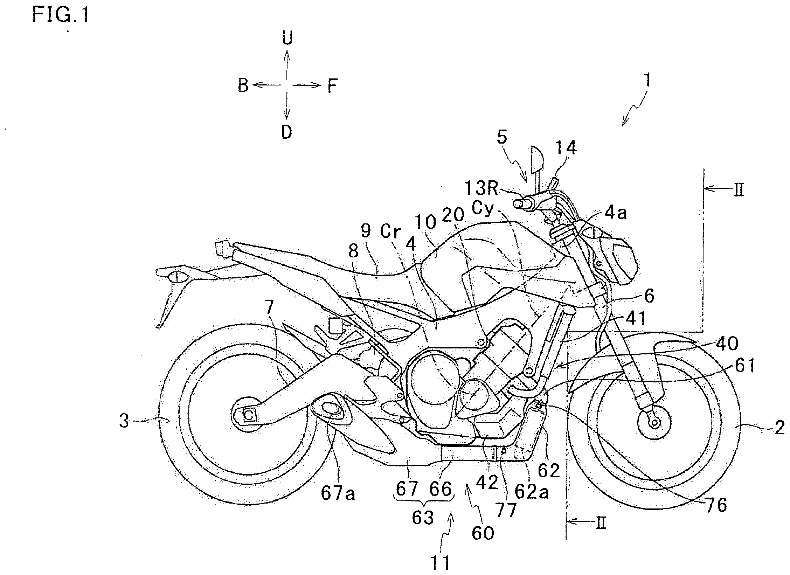

As shown in FIG. 1, the motorcycle 1 is provided with a front wheel unit 2, a rear wheel unit 3, and a vehicle body frame 4. The vehicle body frame 4 includes a head pipe 4a at a front portion. A steering shaft (not illustrated) is rotatably inserted into the head pipe 4a. An upper end portion of the steering shaft is connected to a handle unit 5. An upper end portion of a pair of front forks 6 is fixed to the handle unit 5. The lower end portions of the front forks 6 support the front wheel unit 2. The front forks 6 are configured to absorb shocks in the up-down direction. The front wheel unit 2 includes a single front wheel. An upper part of the front wheel unit 2 is covered with a fender. This fender is not included in the front wheel unit 2.

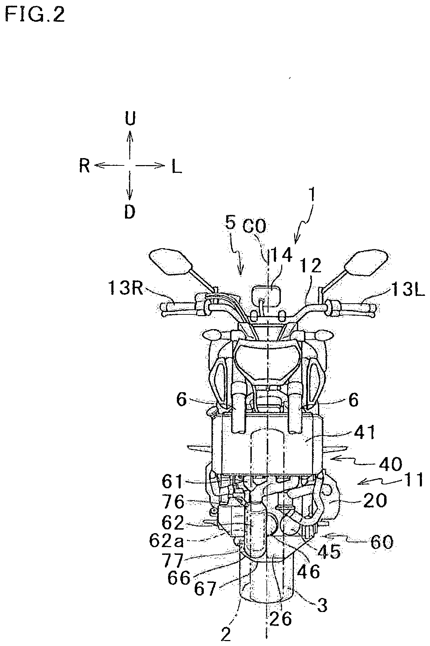

As shown in FIG. 2, the handle unit 5 includes a single handlebar 12 which extends in the left-right direction. Grips 13L and 13R are provided at left and right ends of the handlebar 12, respectively. The left grip 13R is a throttle grip for adjusting the output of the engine. A display 14 is attached to the handlebar 12. Although not illustrated, the display 14 displays vehicle speed, engine rotation speed, and the like. A warning lamp is provided on the display 14. Furthermore, switches are provided on the handlebar 12.

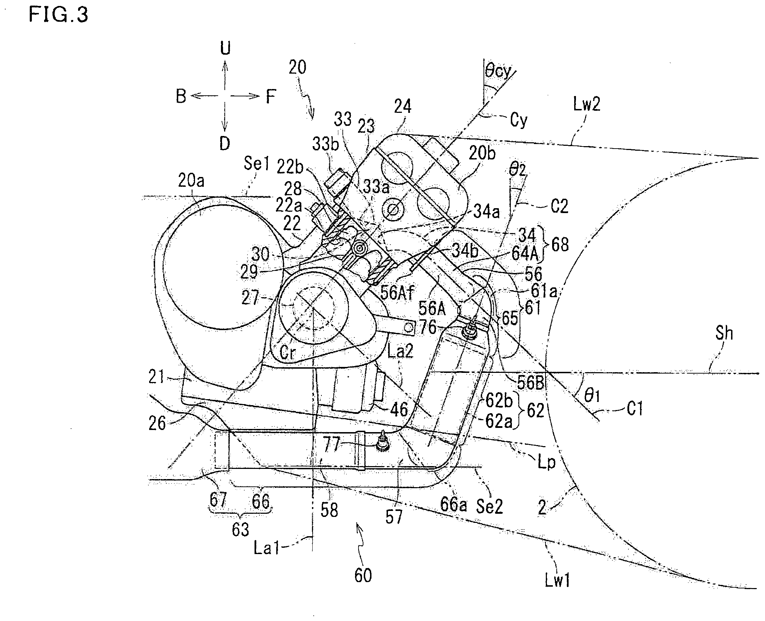

As shown in FIG. 1, a pair of swingarms 7 is swingably supported by the vehicle body frame 4. The rear end portions of the swingarms 7 support the rear wheel unit 3. The rear wheel unit 3 includes a single rear wheel. One end portion of a rear suspension 8 is attached to a part of each swingarm 7, which is rearward of the swing center. The other end portion of the rear suspension 8 is attached to the vehicle body frame 4. The rear suspension 8 is configured to absorb shocks in the up-down direction. FIG. 1, FIG. 2, and later-described FIG. 3 show a state in which the front forks 6 and the rear suspension 8 are maximally elongated in the up-down direction. In other words, the vehicle body frame 4 is at the highest relative to the front wheel unit 2 and the rear wheel unit 3.

The vehicle body frame 4 supports the seat 9 and the fuel tank 10. The fuel tank 10 is provided in front of the seat 9. The vehicle body frame 4 supports the engine unit 11. The engine unit 11 may be directly or indirectly connected to the vehicle body frame 4. The engine unit 11 is provided straight below the fuel tank 10. The engine unit 11 is provided below the upper end of the seat 9. The front wheel unit 2 is provided in front of the engine unit 11 when viewed in the left-right direction. The rear wheel unit 3 is provided behind the engine unit 11 when viewed in the left-right direction. As shown in FIG. 2, the width in the left-right direction of the engine unit 11 is longer than the width in the left-right direction of the front wheel unit 2. The width in the left-right direction of the engine unit 11 is longer than the width in the left-right direction of the rear wheel unit 3. In this specification, the width in the left-right direction indicates the maximum length in the left-right direction. The vehicle body frame 4 supports a battery (not illustrated). The battery supplies electric power to electronic devices such as a controller (not illustrated) for controlling the engine unit 11 and sensors.

### [Structure of Engine Unit]

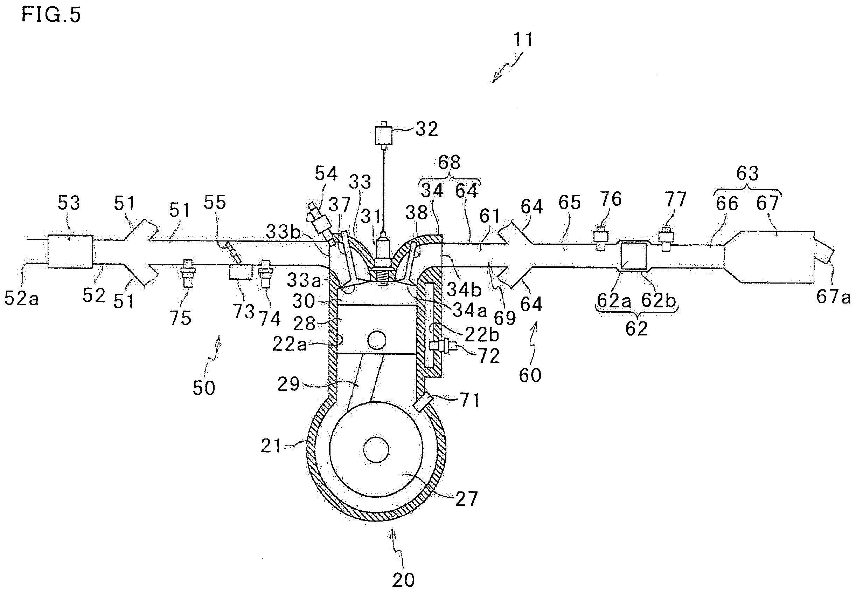

As shown in FIG. 1, the engine unit 11 includes an engine main body 20, a water cooling device 40, and an exhaust device 60. As shown in FIG. 5, an example of the engine unit 11 which is not covered by the present invention further includes an intake device 50. The engine main body 20 is connected to the water cooling device 40, the intake device 50, and the exhaust device 60. The engine unit 11 is a 3-cylinder engine including 3 cylinders. The engine unit 11 is a 4-stroke engine. The 4-stroke engine repeats an intake process, a compression process, a combustion process (expansion process), and an exhaust process. The combustion process in the 3-cylinder engine is performed at different timings in the respective 3 cylinders. FIG. 5 shows only one of the 3 cylinders of the engine main body 20 and does not show the remaining 2 cylinders.

The engine unit 11 is a water-cooled engine. The engine main body 20 is cooled by coolant water. To the water cooling device 40, hot coolant water having absorbed heat from the engine main body 20 is supplied from the engine main body 20. The water cooling device 40 decreases the temperature of the coolant water supplied from the engine main body 20 and returns the coolant water to the engine main body 20. The water cooling device 40 includes a radiator 41, a radiator fan (not illustrated), and a reserve tank 42. The radiator 41 is provided in front of an upper part of the engine main body 20. The radiator fan is provided between the engine main body 20 and the radiator 41. The reserve tank 42 is provided in front of a lower part of the engine main body 20. The reserve tank 42 is provided in front of a right part of the engine main body 20. The reserve tank 42 may not be provided in front of a right part of the engine main body 20. The engine unit 11 includes a water pump (not illustrated) for circulating the coolant water. This water pump is provided in the engine main body 20.

### [Structure of Engine Main Body]

As shown in FIG. 3, the engine main body 20 includes a crankcase member 20a and a cylinder portion 20b. The crankcase member 20a is provided at a lower part of the engine main body 20. The cylinder portion 20b is provided at an upper part of the engine main body 20. The cylinder portion 20b is connected to an upper end portion of the crankcase member 20a.

The crankcase member 20a includes a crankcase 21 and an oil pan 26. The crankcase member 20a is further provided with a crankshaft 27 housed in the crankcase 21. Although not illustrated, the crankcase member 20a includes a transmission, a clutch, a starter motor, and a power generator. These members are housed in the crankcase 21, too. Hereinafter, the central axis Cr of the crankshaft 27 is referred to as a crankshaft axis Cr. The crankshaft axis Cr is along the left-right direction. To be more specific, the crankshaft axis Cr is in parallel to the left-right direction.

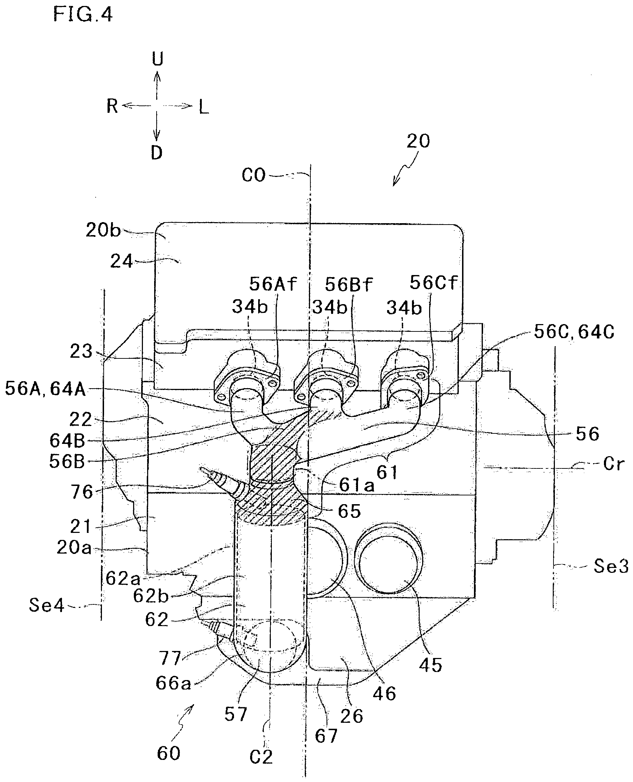

The oil pan 26 is provided at a lower part of the crankcase member 20a. The oil pan 26 is connected to a lower end of the crankcase 21. When viewed in the left-right direction, the border between the oil pan 26 and the crankcase 21 is substantially a linear line. When viewed in the left-right direction, an extension of the border between the oil pan 26 and the crankcase 21 is referred to as a linear line Lp. The linear line Lp is along the front-rear direction. The linear line Lp is inclined with a negative slope in the forward direction. The linear line Lp may orthogonally intersect with a later-described cylinder axial line Cy. As shown in FIG. 4, a right part of the oil pan 26 is dented. In other words, the right part of the oil pan 26 is above the left part of the oil pan 26. A part of the exhaust device 60 is provided in the dent of the oil pan 26. The oil pan 26 stores lubrication oil. The crankcase member 20a includes an oil pump (not illustrated) which is configured to suck the lubrication oil stored in the oil pan 26.

As shown in FIG. 4, an oil filter 45 and an oil cooler 46 are provided at a front portion of the crankcase member 20a. The oil cooler 46 is provided substantially at the center in the left-right direction of the crankcase member 20a. The oil filter 45 is provided to the left of the oil cooler 46. It is assumed that a plane which passes the center in the left-right direction of the front wheel unit 2 and the rear wheel unit 3 is C0. The center in the left-right direction of the front wheel unit 2 and the rear wheel unit 3 is the center in the left-right direction of the motorcycle 1. Hereinafter, the center in the left-right direction of the motorcycle 1 will be referred to as the center C0 in the left-right direction of the motorcycle 1. The oil cooler 46 is provided to overlap the center C0 in the left-right direction of the motorcycle 1. The oil filter 45 is provided to the left of the center C0 in the left-right direction of the motorcycle 1. As shown in FIG. 3, the oil cooler 46 protrudes forward from the front surface of the crankcase 21. Being similar to the oil cooler 46, the oil filter 45 protrudes from the front surface of the crankcase 21, too. A filter main body (not illustrated) is provided inside the oil filter 45. The filter main body is configured to remove foreign matter in the lubrication oil. In consideration of the replacement of the filter main body, the oil filter 45 is arranged to be detachable from the crankcase 21.

As shown in FIG. 3, the cylinder portion 20b includes a cylinder body 22, a cylinder head 23, and a head cover 24. The cylinder body 22 is connected to an upper end portion of the crankcase 21. The cylinder head 23 is connected to an upper end portion of the cylinder body 22. The head cover 24 is connected to an upper end portion of the cylinder head 23.

As shown in FIG. 3 which is covered by the present invention and FIG. 5 which is not covered by the present invention, cylinder holes 22a are formed in the cylinder body 22. Three cylinder holes 22a are formed in the cylinder body 22. The three cylinder holes 22a are side by side in the left-right direction. A piston 28 is slidably housed in each cylinder hole 22a. The three pistons 28 are connected to a single crankshaft 27 via three connecting rods 29. Around the three cylinder holes 22a, a cooling passage 22b is formed to allow the coolant water to flow therein.

Hereinafter, the central axis Cy of the cylinder hole 22a is referred to as a cylinder axial line Cy. The three cylinder axial lines Cy are in parallel to one another. When viewed in the left-right direction, the three cylinder axial lines Cy overlap. As shown in FIG. 3, the cylinder axial lines Cy do not intersect with the crankshaft axis Cr. The cylinder axial lines Cy may intersect with the crankshaft axis Cr. The cylinder axial lines Cy are along the up-down direction. When viewed in the left-right direction, each cylinder axial line Cy is inclined in the front-rear direction with respect to the up-down direction. The cylinder axial line Cy is inclined so that the cylinder portion 20b is inclined forward. In other words, the cylinder axial line Cy is inclined with a positive slope in the forward direction. When viewed in the left-right direction, an inclination angle of the cylinder axial line Cy with respect to the up-down direction is termed an inclination angle θcy. The inclination angle θcy is not limited to the angle shown in FIG. 3. The inclination angle θcy is 0 degrees or greater than 0 degrees and 45 degrees or less than 45 degrees.

As shown in FIG. 3 which shows an engine unit of an embodiment of the present invention and FIG. 5 which shows an engine unit not covered by the present invention, combustion chambers 30 are formed in the cylinder portion 20b. Three combustion chambers 30 are formed in the cylinder portion 20b. The three combustion chambers 30 are side by side in the left-right direction. Each combustion chamber 30 is formed of the lower surface of the cylinder head 23, the cylinder hole 22a, and the upper surface of the piston 28. In other words, a part of the combustion chamber 30 is formed by the inner surface of the cylinder hole 22a. As shown in FIG. 3, it is assumed that a linear line which passes the crankshaft axis Cr and is in parallel to the up-down direction when viewed in the left-right direction is a linear line La1. When viewed in the left-right direction, the three combustion chambers 30 are provided in front of the linear line La1. In other words, when viewed in the left-right direction, the three combustion chambers 30 are provided forward of the crankshaft axis Cr.

A leading end portion of an ignition plug 31 is provided in the combustion chamber 30, as shown in FIG. 5 which is not covered by the present invention. Spark discharge occurs at the leading end portion of the ignition plug 31. With this spark discharge, air-fuel mixture in the combustion chamber 30 is ignited. In this specification, the air-fuel mixture indicates a mixture of air and fuel. The ignition plug 31 is connected to an ignition coil 32. The ignition coil 32 stores electric power to cause spark discharge of the ignition plug 31. The ignition plug 31 and the ignition coil 32 constitute an ignition device.

Internal intake passage members 33 and internal exhaust passage members 34 are formed in the cylinder head 23. In this specification, a passage member is a structure forming a path. A path is a space through which gas or the like passes. The internal intake passage member 33 is connected to the combustion chamber 30. The internal intake passage member 33 is provided for each combustion chamber 30. The internal exhaust passage member 34 is connected to the combustion chamber 30. The internal exhaust passage member 34 is provided for each combustion chamber 30. The internal intake passage member 33 is provided to introduce air into the combustion chamber 30. The internal exhaust passage member 34 is provided to discharge the exhaust gas generated in the combustion chamber 30 from the combustion chamber 30.

A combustion chamber intake port 33a and a combustion chamber exhaust port 34a are formed in surfaces of the cylinder head 23 which form the combustion chamber 30. The combustion chamber intake port 33a is at the downstream end of the internal intake passage member 33. The combustion chamber exhaust port 34a is at the upstream end of the internal exhaust passage member 34. Intake ports 33b and exhaust ports 34b are formed in an outer surface of the cylinder head 23. The intake port 33b is at the upstream end of the internal intake passage member 33. The exhaust port 34b is at the downstream end of the internal exhaust passage member 34. The number of combustion chamber intake ports 33a provided for one combustion chamber 30 may be one, two, or more than two. The number of intake ports 33b is only one for one combustion chamber 30. For example, when two combustion chamber intake ports 33a are provided for one combustion chamber 30, the internal intake passage member 33 is formed to be branched into two. The number of combustion chamber exhaust ports 34a provided for one combustion chamber 30 may be one, two, or more than two. The number of exhaust ports 34b is only one for one combustion chamber 30. As shown in FIG. 3, the intake ports 33b are formed in the front surface of the cylinder head 23. The exhaust ports 34b are formed in the front surface of the cylinder head 23. As shown in FIG. 4, the three exhaust ports 34b are arranged to be side by side along the left-right direction.

As shown in FIG. 5, in the internal intake passage member 33, an intake valve 37 is provided to open and close the combustion chamber intake port 33a. The intake valve 37 is provided for each combustion chamber intake port 33a. In the internal exhaust passage member 34, an exhaust valve 38 is provided to open and close the combustion chamber exhaust port 34a. The exhaust valve 38 is provided for each combustion chamber exhaust port 34a. The intake valve 37 and the exhaust valve 38 are driven by a valve driving device (not illustrated) housed in the cylinder head 23. The valve driving device operates in sync with the crankshaft 27. The valve driving device may include a variable valve timing device. A known device is used as the variable valve timing device. The variable valve timing device is configured to change the timings to open and close the intake valve and/or the exhaust valve.

The engine main body 20 includes injectors 54. Each injector 54 is a fuel supplier configured to supply fuel to the combustion chamber 30. The injector 54 is provided for each combustion chamber 30. The injector 54 is positioned to inject fuel in the internal intake passage member 33. The injector 54 is connected to the fuel tank 10. A fuel pump (not illustrated) is provided inside the fuel tank 10. The fuel pump supplies fuel in the fuel tank 10 to the injector 54 with a pressure. The injector 54 may be positioned to inject fuel in the combustion chamber 30. Alternatively, the injector 54 may be positioned to inject fuel in a later-described branched intake passage member 51 of the intake device 50. The engine main body 20 may include a carburetor as a fuel supplier instead of the injector 54. The carburetor is configured to supply fuel into the combustion chamber 30 by utilizing a negative pressure in the combustion chamber 30.

The engine main body 20 includes an engine rotation speed sensor 71 and an engine temperature sensor 72. The engine rotation speed sensor 71 detects the rotation speed of the crankshaft 27, i.e., the engine rotation speed. The engine temperature sensor 72 detects the temperature of the engine main body 20. In the present example, the engine temperature sensor 72 indirectly detects the temperature of the cylinder body 22 by detecting the temperature of the coolant water in the cooling passage 22b. The engine temperature sensor 72 may directly detect the temperature of the cylinder body 22.

### [Structure of Intake Device]

The intake device 50 includes one intake passage member 52 and three branched intake passage members 51. The intake passage member 52 is provided with an atmosphere suction port 52a which is exposed to the atmosphere. The atmosphere suction port 52a is at the upstream end of the intake passage member 52. The intake passage member 52 is provided with an air cleaner 53 configured to purify air. The downstream end of the intake passage member 52 is connected to the upstream ends of the three branched intake passage members 51. The downstream ends of the three branched intake passage members 51 are connected to the three intake ports 33b formed in the rear surface of the cylinder head 23, respectively. The atmosphere suction port 52a sucks air from the atmosphere. The air flowing into the intake passage member 52 through the atmosphere suction port 52a is supplied to the engine main body 20 via the three branched intake passage members 51.

A throttle valve 55 is provided in the branched intake passage member 51. One throttle valve 55 is provided for each combustion chamber 30. The opening degree of the throttle valve 55 is changed as the rider rotationally operates the throttle grip 13R.

A throttle position sensor 73, an intake pressure sensor 74, and an intake temperature sensor 75 are provided in each branched intake passage member 51. The throttle position sensor 73 detects the position of the throttle valve 55 and outputs a signal indicating a throttle opening degree. The throttle opening degree indicates the opening degree of the throttle valve 55. The intake pressure sensor 74 detects an internal pressure of the branched intake passage member 51. The intake temperature sensor 75 detects the temperature of air in the branched intake passage member 51.

### [Structure of Exhaust Device]

As shown in FIG. 5, the exhaust device 60 includes an upstream exhaust passage member 61, a catalyst portion (catalytic converter) 62, and a downstream collective exhaust passage member 63. Hereinafter, the upstream and downstream in the flow direction of exhaust gas of the exhaust device 60 and the internal exhaust passage member 34 will be simply referred to as upstream and downstream. The upstream exhaust passage member 61 includes three independent exhaust passage members 64 and an upstream collective exhaust passage member 65. One independent exhaust passage member 64 is provided for each combustion chamber 30. The downstream collective exhaust passage member 63 includes a downstream exhaust passage member 66 and a muffler member 67. The upstream ends of the three independent exhaust passage members 64 are connected to the three exhaust ports 34b formed in the front surface of the cylinder head 23, respectively. The downstream ends of the three independent exhaust passage members 64 are connected to the upstream end of the upstream collective exhaust passage member 65. The upstream collective exhaust passage member 65 gathers (merges) flows of the exhaust gas discharged from the three independent exhaust passage members 64. The downstream end of the upstream collective exhaust passage member 65 is connected to the upstream end of the catalyst portion 62. The catalyst portion 62 includes a main catalyst 62a which is configured to purify exhaust gas. The downstream end of the catalyst portion 62 is connected to the upstream end of the downstream exhaust passage member 66. The downstream end of the downstream exhaust passage member 66 is connected to the upstream end of the muffler member 67. The muffler member 67 has an atmosphere discharge port 67a exposed to the atmosphere. The exhaust gas discharged from the three exhaust ports 34b of the engine main body 20 passes the upstream exhaust passage member 61 and flows into the catalyst portion 62. After the exhaust gas is purified while passing through the main catalyst 62a, the exhaust gas passes the downstream collective exhaust passage member 63 and is discharged from the atmosphere discharge port 67a.

A passage member including the internal exhaust passage member 34 and the independent exhaust passage member 64 will be referred to as an independent exhaust passage member 68. One independent exhaust passage member 68 is provided for each combustion chamber 30. Furthermore, a passage from the combustion chamber 30 to the atmosphere discharge port 67a will be referred to as an exhaust path 69. The engine unit 11 is provided with three exhaust paths 69. The exhaust path 69 is a space in which the exhaust gas discharged from one combustion chamber 30 passes. The exhaust path 69 is formed of the independent exhaust passage member 68, the upstream collective exhaust passage member 65, the catalyst portion 62, and the downstream collective exhaust passage member 63. To put it differently, the exhaust path 69 is formed of the internal exhaust passage member 34, the upstream exhaust passage member 61, the catalyst portion 62, and the downstream collective exhaust passage member 63.

The following will describe the exhaust device 60 in a further detailed manner. As shown in FIG. 3, FIG. 4, and FIG. 8 which is not covered by the present invention, the exhaust device 60 includes an exhaust pipe unit 56, a first collective exhaust pipe 57, a second collective exhaust pipe 58, and a muffler member 67. The exhaust pipe unit 56 includes a first exhaust passage member 56A, a second exhaust passage member 56B, and a third exhaust passage member 56C. The first to third exhaust passage members 56A, 56B, and 56C are provided in this order from right to left. The upstream ends of the first to third exhaust passage members 56A, 56B, and 56C are connected to the three exhaust ports 34b of the engine main body 20, respectively.

A passage which is substantially circular in cross-section is formed inside each of the first to third exhaust passage members 56A, 56B, and 56C. Mounting flange portions 56Af, 56Bf, and 56Cf are provided around the upstream ends of the first to third exhaust passage members 56A, 56B, and 56C. Each of the mounting flange portions 56Af, 56Bf, and 56Cf is plate-shaped. Each of the mounting flange portions 56Af, 56Bf, and 56Cf has a bolt hole to which a bolt is inserted. A part of the first exhaust passage member 56A, which is upstream of the mounting flange portion 56Af, is inserted into the internal exhaust passage member 34. The same applies to the second exhaust passage member 56B and the third exhaust passage member 56C. Each of the mounting flange portions 56Af, 56Bf, and 56Cf is in contact with the outer surface of the engine main body 20. Each of the mounting flange portions 56Af, 56Bf, and 56Cf is fixed to the outer surface of the engine main body 20 by a bolt. The total of the areas of the mounting flange portions 56Af, 56Bf, and 56Cf indicate the area of a part where the outer surface of the engine main body 20 is connected to the exhaust pipe unit 56.

The downstream ends of the first exhaust passage member 56A and the third exhaust passage member 56C are connected to an intermediate part of the second exhaust passage member 56B. The downstream end of the second exhaust passage member 56B is connected to the upstream end of the first collective exhaust pipe 57. The first exhaust passage member 56A forms an independent exhaust passage member 64A. The independent exhaust passage member 64A, however, does not include a part of the first exhaust passage member 56A, which is upstream of the mounting flange portion 56Af. In the second exhaust passage member 56B, a part upstream of the positions where the first exhaust passage member 56A and the third exhaust passage member 56C are respectively connected forms an independent exhaust passage member 64B. The independent exhaust passage member 64B, however, does not include a part of the second exhaust passage member 56B, which is upstream of the mounting flange portion 56Bf. The third exhaust passage member 56C forms an independent exhaust passage member 64C. The independent exhaust passage member 64C, however, does not include a part of the third exhaust passage member 56C, which is upstream of the mounting flange portion 56Cf. The independent exhaust passage members 64 collectively indicate the independent exhaust passage members 64A, 64B, and 64C.

A main catalyst 62a is provided in the first collective exhaust pipe 57. A part of the first collective exhaust pipe 57, where the main catalyst 62a is provided, is referred to as a cylindrical part 62b. The catalyst portion 62 consists of the cylindrical part 62b and the main catalyst 62a. The upstream collective exhaust passage member 65 is constituted of a part of the second exhaust passage member 56B which is downstream of the independent exhaust passage member 64B and a part of the first collective exhaust pipe 57 which is upstream of the main catalyst 62a. In FIG. 4, the upstream collective exhaust passage member 65 is hatched.

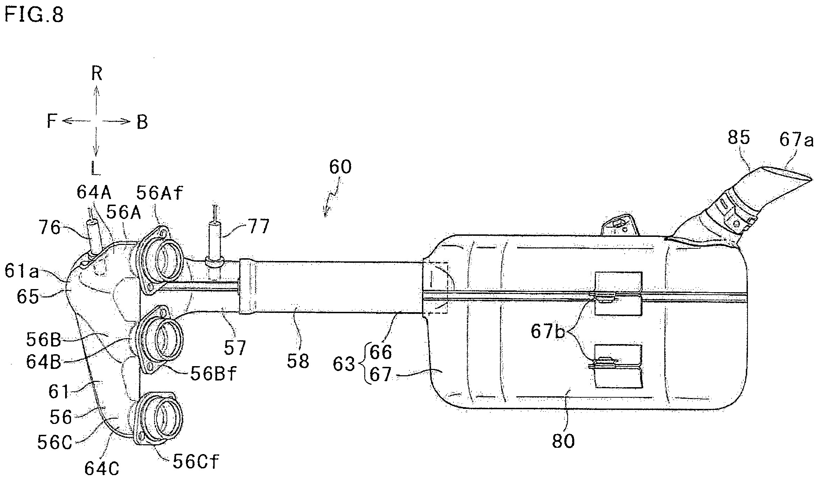

The downstream end of the first collective exhaust pipe 57 is connected to the upstream end of the second collective exhaust pipe 58. The first collective exhaust pipe 57 is a pipe which is substantially circular in cross-section. The second collective exhaust pipe 58 is a pipe which is substantially circular in cross-section. As shown in FIG. 8, the first collective exhaust pipe 57 is formed by welding left and right components. The downstream end of the second collective exhaust pipe 58 is connected to the muffler member 67. To be more specific, the downstream end of the second collective exhaust pipe 58 is provided in the muffler member 67. The downstream exhaust passage member 66 is constituted of a part of the first collective exhaust pipe 57, which is downstream of the main catalyst 62a, and the second collective exhaust pipe 58. The downstream exhaust passage member 66, however, does not include a part of the second collective exhaust pipe 58, which is provided in the muffler member 67.

As shown in FIG. 3, when viewed in the left-right direction, three independent exhaust passage members 64 are linearly arranged, respectively. The upstream collective exhaust passage member 65 includes an upstream bended portion 61a. The upstream bended portion 61a is bended when viewed in the left-right direction. The upstream bended portion 61a is formed at the second exhaust passage member 56B. When viewed in the left-right direction, the flow direction of exhaust gas is along an obliquely forward and downward direction at the part of the upstream exhaust passage member 61, which is upstream of the upstream bended portion 61a. When viewed in the left-right direction, an axis passing the center of the part of the upstream exhaust passage member 61 upstream of the upstream bended portion 61a is a central axis C1. The direction of the central axis C1 is identical to the flow direction of the exhaust gas at the upstream end of the independent exhaust passage member 64A. An inclination angle of the central axis C1 with respect to the front-rear direction is referred to as an inclination angle θ1. The inclination angle θ1 is not limited to the angle shown in FIG. 3. The inclination angle θ1 is 0 degrees or greater than 0 degrees and 45 degrees or less than 45 degrees. Due to this, when viewed in the left-right direction, the central axis C1 is along the front-rear direction. In other words, when viewed in the left-right direction, the flow direction of exhaust gas is along the front-rear direction at the part of the upstream exhaust passage member 61, which is upstream of the upstream bended portion 61a.

When viewed in the left-right direction, the flow direction of exhaust gas is along an obliquely rearward and downward direction at the part of the upstream exhaust passage member 61, which is downstream of the upstream bended portion 61a. The central axis of the catalyst portion 62 is referred to as a central axis C2. When viewed in the left-right direction, an axis which passes the center of a part of the upstream exhaust passage member 61, which is downstream of the bended portion 61a, is coaxial with the central axis C2. When viewed in the left-right direction, an inclination angle of the central axis C2 with respect to the up-down direction is referred to as an inclination angle θ2. The inclination angle θ2 is not limited to the angle shown in FIG. 3. The inclination angle θ2 is 0 degrees or greater than 0 degrees and 45 degrees or less than 45 degrees. Due to this, when viewed in the left-right direction, the central axis C2 is along the up-down direction. In other words, when viewed in the left-right direction, the flow direction of exhaust gas is along the up-down direction at the part of the upstream exhaust passage member 61, which is downstream of the upstream bended portion 61a. When viewed in the left-right direction, the upstream bended portion 61a changes the flow direction of the exhaust gas flowing therein, from the direction along the front-rear direction to the direction along the up-down direction. To be more specific, when viewed in the left-right direction, the upstream bended portion 61a changes the flow direction of the exhaust gas flowing therein, from the direction along the forward direction to the direction along the downward direction. The upstream bended portion 61a may be formed in the first collective exhaust pipe 57. The upstream bended portion 61a may be formed in each of the three independent exhaust passage members 64.

As described above, when viewed in the left-right direction, the central axis C2 of the catalyst portion 62 is along the up-down direction. When viewed in the front-rear direction, the central axis C2 of the catalyst portion 62 is substantially in parallel to the up-down direction. The central axis C2 of the catalyst portion 62 is along the up-down direction. In other words, the flow direction of the exhaust gas flowing in the catalyst portion 62 is along the up-down direction. To be more specific, the flow direction of the exhaust gas flowing in the catalyst portion 62 is the direction along the downward direction. The flow direction of the exhaust gas flowing in the catalyst portion 62 is obliquely rearward and downward. The center of the upstream end of the catalyst portion 62 is forward of the center of the downstream end of the catalyst portion 62 when viewed in the left-right direction. When viewed in the front-rear direction, the central axis C2 of the catalyst portion 62 may be tilted in the left-right direction with respect to the up-down direction.

The downstream exhaust passage member 66 includes a downstream bended portion 66a. The downstream bended portion 66a is bended when viewed in the left-right direction. The downstream bended portion 66a is formed at an upstream end portion of the downstream exhaust passage member 66. When viewed in the left-right direction, an axis passing the center of the upstream end of the downstream exhaust passage member 66 is coaxial with the central axis C2. When viewed in the left-right direction, the flow direction of exhaust gas is along the front-rear direction at the part of the downstream exhaust passage member 66, which is downstream of the downstream bended portion 66a. When viewed in the left-right direction, the flow direction of exhaust gas is substantially in parallel to the front-rear direction at the part of the downstream exhaust passage member 66, which is downstream of the downstream bended portion 66a. When viewed in the left-right direction, the downstream bended portion 66a changes the flow direction of the exhaust gas flowing therein, from the direction along the up-up-down direction to the direction along the front-rear direction. To be more specific, the downstream bended portion 66a changes the flow direction of the exhaust gas flowing therein, from the direction along the downward direction to the direction along the rearward direction. The downstream bended portion 66a may be formed at an intermediate part of the downstream exhaust passage member 66.

The downstream end and its surroundings of the upstream collective exhaust passage member 65 are tapered so that the diameter increases downward. This tapered portion is formed downstream of the upstream bended portion 61a. It is assumed that the cross-sectional area of the downstream end and its surroundings of the upstream collective exhaust passage member 65 cut along the direction orthogonal to the flow direction of the exhaust gas is a first cross-sectional area. Furthermore, it is assumed that the cross-sectional area of the catalyst portion 62 cut along the direction orthogonal to the flow direction of the exhaust gas is a second cross-sectional area. The first cross-sectional area is smaller than the second cross-sectional area. The upstream end and its surroundings of the downstream exhaust passage member 66 are tapered so that the diameter decreases downward. This tapered portion is formed at the downstream bended portion 66a. It is assumed that the cross-sectional area of the upstream end and its surroundings of the downstream exhaust passage member 66 cut along the direction orthogonal to the flow direction of the exhaust gas is a third cross-sectional area. The third cross-sectional area is smaller than the second cross-sectional area.

The muffler member 67 is a device for reducing noise generated by exhaust gas. As shown in FIG. 8, a bracket 67b is provided on the upper surface of the muffler member 67. The bracket 67b is attached to the vehicle body frame 4. In other words, the muffler member 67 is supported by the vehicle body frame 4. The muffler member 67 includes an external cylinder 80 and a tail pipe 85. The external cylinder 80 is formed by welding the left and right components.

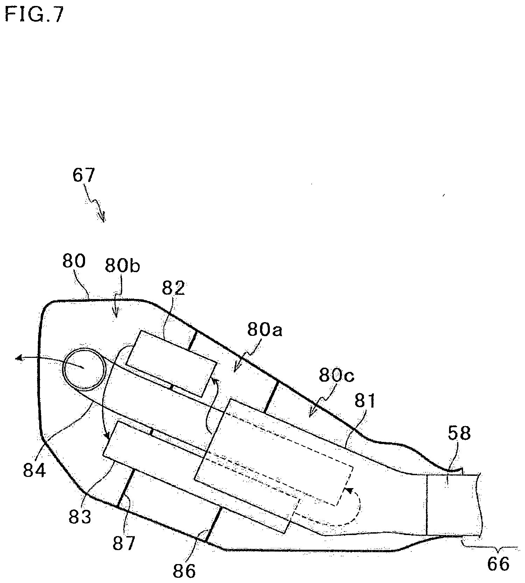

As shown in FIG. 7 which is not covered by the present invention, the muffler member 67 includes four pipes 81 to 84 housed in the external cylinder 80. The inside of the external cylinder 80 is divided into three expansion chambers 80a, 80b, and 80c by two separators 86 and 87. The first pipe 81 is connected to the downstream end of the second collective exhaust pipe 58. A part of the second collective exhaust pipe 58, which is inside the external cylinder 80, is included in the muffler member 67. The first pipe 81 allows the second collective exhaust pipe 58 to communicate with the central first expansion chamber 80a among the three expansion chambers. The second pipe 82 allows the first expansion chamber 80a to communicate with the second expansion chamber 80b behind the first expansion chamber 80a. The third pipe 83 allows the second expansion chamber 80b to communicate with the third expansion chamber 80c in front of the first expansion chamber 80a. The fourth pipe 84 allows the third expansion chamber 80c to communicate with the tail pipe 85 (see FIG. 8). The fourth pipe 84 is bended inside the second expansion chamber 80b. The tail pipe 85 penetrates the right wall of the second expansion chamber 80b. In the second expansion chamber 80b, the tail pipe 85 is connected to the fourth pipe 84. The opening at the downstream end of the tail pipe 85 is the atmosphere discharge port 67a. The exhaust gas discharged from the second collective exhaust pipe 58 passes the first pipe 81, the first expansion chamber 80a, the second pipe 82, the second expansion chamber 80b, the third pipe 83, the third expansion chamber 80c, the fourth pipe 84, and the tail pipe 85 in this order. The exhaust gas is then discharged to the atmosphere through the atmosphere discharge port 67a. A sound absorbing material such as glass wool may or may not be provided between the inner surface of the external cylinder 80 and the outer surfaces of the four pipes 81 to 84. The internal structure of the muffler member 67 is not limited to the structure shown in FIG. 7.

Subsequently, the catalyst portion 62 is further detailed. As shown in FIG. 3 and FIG. 4, the catalyst portion 62 includes the main catalyst 62a and the cylindrical part 62b. The cylindrical part 62b is connected to the downstream end of the upstream collective exhaust passage member 65 and the upstream end of the downstream exhaust passage member 66. The cylindrical part 62b may be integrally molded with a part of the upstream collective exhaust passage member 65. The cylindrical part 62b may be integrally molded with a part of the downstream exhaust passage member 66. The exhaust device 60 does not include catalysts other than the main catalyst 62a. The main catalyst 62a purifies the exhaust gas most in a plurality of exhaust paths 69 (see FIG. 5).

The main catalyst 62a is formed to be cylindrical. The main catalyst 62a has a porous structure. The porous structure indicates a structure in which through holes are formed along the flow direction of the exhaust gas. The main catalyst 62a is a three-way catalyst. The three-way catalyst removes three substances in exhaust gas, namely hydrocarbon (HC), carbon monoxide (CO), and nitrogen oxide (NOx), by oxidation or reduction. The three-way catalyst is a type of oxidation-reduction catalyst. The main catalyst 62a may be a catalyst which removes one or two of hydrocarbon, carbon monoxide, and nitrogen oxide. The main catalyst 62a may not be an oxidation-reduction catalyst. The main catalyst may be an oxidation catalyst which removes harmful substances only by oxidation. The main catalyst may be a reduction catalyst which removes harmful substances only by reduction. The main catalyst 62a includes a base and catalyst materials attached to the surface of the base. The catalyst materials are formed of a carrier and noble metals. The carrier has a function of attaching noble metals to a base. The noble metal has a function of purifying the exhaust gas. Examples of noble metals include platinum, palladium, and rhodium which remove hydrocarbon, carbon monoxide, and nitrogen oxide, respectively. When the temperature of the main catalyst 62a is lower than a predetermined temperature, the main catalyst 62a is inactive and does not exert the purification performance. When the temperature of the main catalyst 62a is equal to or higher than the predetermined temperature, the main catalyst 62a is active and exerts the purification performance. The main catalyst 62a may be a metal-base catalyst or a ceramic-base catalyst. The metal-base catalyst is a catalyst in which the base is made of metal. The ceramic-base catalyst is a catalyst in which the base is made of ceramic. The base of the metal-base catalyst is formed by, for example, alternately stacking metal corrugated plates and metal flat plates and winding them. The base of the ceramic-base catalyst is, for example, a honeycomb structure body.

The central axis C2 of the catalyst portion 62 is coaxial with the central axis of the main catalyst 62a. The central axis C2 of the catalyst portion 62 indicates the central axis of the cylindrical part 62b. The length in the flow direction of the exhaust gas of the catalyst portion 62 is identical to the length in the flow direction of the exhaust gas of the main catalyst 62a. The center of the upstream end of the main catalyst 62a is identical in position to the center of the upstream end of the catalyst portion 62. The center of the downstream end of the main catalyst 62a is identical in position to the center of the downstream end of the catalyst portion 62. The length in the flow direction of the exhaust gas of the catalyst portion 62 is termed a length Dc1 (not illustrated). Furthermore, the maximum length in the direction orthogonal to the flow direction of the exhaust gas of the catalyst portion 62 is termed Dc2 (not illustrated). The length Dc1 is longer than the length Dc2.

As shown in FIG. 3, when viewed in the left-right direction, the catalyst portion 62 is provided in front of the engine main body 20. A plane which passes the uppermost end of the crankcase member 20a and is orthogonal to the up-down direction is termed a plane Se1. A plane which passes the lowermost end of the crankcase member 20a and is orthogonal to the up-down direction is termed a plane Se2. The catalyst portion 62 is provided between the plane Se 1 and the plane Se2. When viewed in the left-right direction, the catalyst portion 62 is provided in front of the crankcase member 20a. The lower end of the catalyst portion 62 is positioned above the lower end of the engine main body 20. The lower end of the engine main body 20 is the lower end of the crankcase member 20a. The lower end of the catalyst portion 62 may be positioned below the lower end of the engine main body 20. As shown in FIG. 4, a plane which passes the leftmost end of the engine main body 20 and is orthogonal to the left-right direction is termed a plane Se3. The plane Se3 passes the leftmost end of the crankcase member 20a. A plane which passes the rightmost end of the engine main body 20 and is orthogonal to the left-right direction is termed a plane Se4. The plane Se4 passes the rightmost end of the crankcase member 20a. The catalyst portion 62 is provided between the plane Se3 and the plane Se4. When viewed from the front, a lower end portion of the catalyst portion 62 does not overlap the engine main body 20. When viewed from the front, the lower end portion of the catalyst portion 62 does not overlap the crankcase member 20a. A part of the catalyst portion 62 is provided in front of the engine main body 20. A part of the catalyst portion 62 is provided in front of the crankcase member 20a. The catalyst portion 62 may be entirely in front of the engine main body 20. At least a part of the catalyst portion 62 is preferably provided in front of the engine main body 20. The entire catalyst portion 62 may be provided in front of the crankcase member 20a. At least a part of the catalyst portion 62 is preferably provided in front of the crankcase member 20a.

When viewed in the left-right direction, the catalyst portion 62 is provided in front of the linear line La1. In other words, the catalyst portion 62 is provided forward of the crankshaft axis Cr. The catalyst portion 62 is provided below the crankshaft axis Cr. Only a part of the catalyst portion 62 may be provided below the crankshaft axis Cr. At least a part of the catalyst portion 62 is preferably provided below the crankshaft axis Cr. When viewed in the left-right direction, the catalyst portion 62 is provided in front of the cylinder axial line Cy. A linear line which is orthogonal to the cylinder axial line Cy and passes the crankshaft axis Cr when viewed in the left-right direction is termed a linear line La2. When viewed in the left-right direction, a part of the catalyst portion 62 is provided in front of (straight above) the linear line La2. When viewed in the left-right direction, the catalyst portion 62 may be entirely provided in front of the linear line La2. When viewed in the left-right direction, at least a part of the catalyst portion 62 is preferably provided in front of the linear line La2.

When viewed in the left-right direction, the linear line Lp passes the catalyst portion 62. The linear line Lp is an extension of the border line between the crankcase 21 and the oil pan 26 when the engine unit 11 is viewed in the left-right direction. When viewed in the left-right direction, the catalyst portion 62 may be entirely provided straight above (in front of) the linear line Lp. When viewed in the left-right direction, the catalyst portion 62 may be entirely provided straight below (behind) the linear line Lp.

As shown in FIG. 3, a line segment which is the lowest one of line segments connecting points on the outline of the engine main body 20 with points on the outline of the front wheel unit 2 when viewed in the left-right direction is referred to as a line segment Lw 1. The line segment Lw 1 connects the lowermost end of the engine main body 20 with a position in the vicinity of the lowermost end of the front wheel unit 2. When viewed in the left-right direction, the catalyst portion 62 is provided straight above the line segment Lw1. A line segment which is the highest one of line segments connecting points on the outline of the engine main body 20 with points on the outline of the front wheel unit 2 when viewed in the left-right direction is referred to as a line segment Lw2. The line segment Lw2 connects the uppermost end of the engine main body 20 with the uppermost end of the front wheel unit 2 or a position in the vicinity of the uppermost end of the front wheel unit 2. When viewed in the left-right direction, the catalyst portion 62 is provided straight below the line segment Lw2. When viewed in the left-right direction, the catalyst portion 62 is provided in a quadrangle having the line segment Lw1 and the line segment Lw2 as two sides. The quadrangle having the line segment Lw 1 and the line segment Lw2 as two sides can be rephrased as a quadrangle in which apexes thereof are the ends of the line segment Lw1 and the ends of the line segment Lw2. When viewed in the left-right direction, the catalyst portion 62 is provided inside the above-described quadrangle and does not overlap the engine main body 20. In other words, when viewed in the left-right direction, the catalyst portion 62 is provided between the engine main body 20 and the front wheel unit 2. When viewed in the left-right direction, only a part of the catalyst portion 62 may be provided between the engine main body 20 and the front wheel unit 2. For example, a part of the catalyst portion 62 may be provided straight below the line segment Lw1. When viewed in the left-right direction, at least a part of the catalyst portion 62 is preferably provided between the engine main body 20 and the front wheel unit 2. When the front forks 6 and/or the rear suspension 8 expands and contracts, the relative position of the vehicle body frame 4 relative to the front wheel unit 2 is changed. The relative position of the engine unit 11 relative to the front wheel unit 2 is therefore changed. When viewed in the left-right direction, at least a part of the catalyst portion 62 is provided between the engine main body 20 and the front wheel unit 2 as described above. This, however, does not indicate that at least a part of the catalyst portion 62 is always provided in this way irrespective of the position of the engine unit 11 relative to the front wheel unit 2. This indicates that at least a part of the catalyst portion 62 is provided between the engine main body 20 and the front wheel unit 2 when viewed in the left-right direction when the position of the engine unit 11 is within a particular range relative to the front wheel unit 2.

As shown in FIG. 3, a horizontal plane passing the center of the front wheel unit 2 is termed a horizontal plane Sh. The horizontal plane Sh passes the catalyst portion 62. In other words, at least a part of the catalyst portion 62 is provided below the horizontal plane Sh. At least a part of catalyst portion 62 may be provided above the horizontal plane Sh. This indicates that at least a part of the catalyst portion 62 is provided below the horizontal plane Sh when the position of the engine unit 11 is within a particular range relative to the front wheel unit 2.

As shown in FIG. 4, the catalyst portion 62 is disposed at a right part of the motorcycle 1. The center of the upstream end and the center of the downstream end of the catalyst portion 62 are not disposed at the center C0 in the left-right direction of the motorcycle 1. The center of the upstream end and the center of the downstream end of the catalyst portion 62 are to the right of the center C0 in the left-right direction of the motorcycle 1. When viewed in the front-rear direction, at least a part of the catalyst portion 62 is provided to the right of the center C0 in the left-right direction of the motorcycle 1.

When viewed in the front-rear direction, the catalyst portion 62 overlaps the oil cooler 46. When viewed in the front-rear direction, the catalyst portion 62 does not overlap the oil filter 45. When viewed in the front-rear direction, the catalyst portion 62 is provided to the right of the oil filter 45. When the exhaust device 60 and the oil filter 45 are viewed from the front side, the oil filter 45 is exposed. Due to this, the oil filter 45 is easily detachable from the engine main body 20. An operation to replace the oil filter 45 can therefore be easily done. When viewed in the front-rear direction, a part of the exhaust device 60 may overlap the oil filter 45. Even in such a case, the oil filter 45 is easily detachable when compared to cases where the entire oil filter 45 is hidden behind the exhaust device 60. When the exhaust device 60 and the oil filter 45 are viewed from the front side, at least a part of the oil filter 45 is preferably exposed.

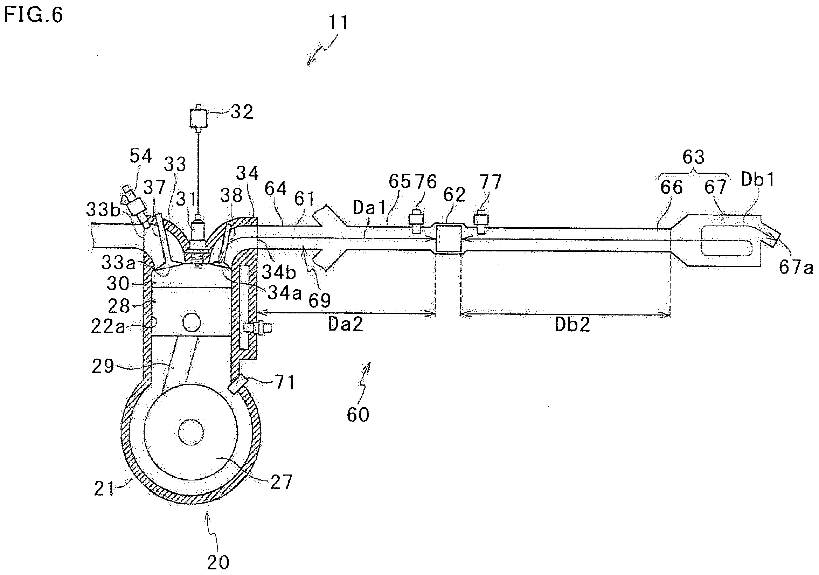

As shown in FIG. 6 which is not covered by the present invention, an average of path lengths from the combustion chamber 30 to the upstream end of the catalyst portion 62 in the three exhaust paths 69 is termed a path length Da1. The path length from the downstream end of the catalyst portion 62 to the atmosphere discharge port 67a is termed a path length Db1. The path length Da1 is shorter than the path length Db1. An average of path lengths from the exhaust port 34b to the upstream end of the catalyst portion 62 in the three exhaust paths 69 is termed a path length Da2. The path length from the downstream end of the catalyst portion 62 to the upstream end of the muffler member 67 is termed a path length Db2. The path length Da2 is shorter than the path length Db2. The path length Da1 is shorter than the path length Db2. The path length Da1 may be longer than the path length Db2. The path length Da2 may be longer than the path length Db2. The path length in the expansion chamber of the muffler member 67 is defined as below. The path length in the first expansion chamber 80a from the downstream end of the first pipe 81 to the upstream end of the second pipe 82 is taken as an example. This path length is the length of the shortest path from the center of the downstream end of the first pipe 81 to the center of the upstream end of the second pipe 82. In other words, the path length in the expansion chamber in the muffler member 67 is the length of the path connecting the center of the inflow port of the expansion chamber with the center of the outflow port of the expansion chamber in the shortest distance.

As shown in FIG. 3 and FIG. 4, the exhaust device 60 includes an upstream oxygen sensor 76 and a downstream oxygen sensor 77. The upstream oxygen sensor 76 is provided on the upstream collective exhaust passage member 65. The upstream oxygen sensor 76 is configured to detect the oxygen density in the exhaust gas in the upstream collective exhaust passage member 65. The downstream oxygen sensor 77 is provided on the downstream exhaust passage member 66. The downstream oxygen sensor 77 is configured to detect the oxygen density in the exhaust gas in the downstream exhaust passage member 66. The exhaust device 60 may not include the downstream oxygen sensor 77.

The engine unit 11 includes a controller (not illustrated) for controlling operations of the engine unit 11. The controller is connected to sensors 71 to 77. The controller controls the engine unit 11 based on signals from the sensors 71 to 77. The controller controls a fuel injection amount of the injector 54 based on signals from the sensors including the upstream oxygen sensor 76. A signal from the downstream oxygen sensor 77 may be used for controlling the fuel injection amount. Furthermore, the controller determines the purification capability of the main catalyst 62a based on a signal from the downstream oxygen sensor 77. The controller may determine the purification capability of the main catalyst 62a based on a signal of the upstream oxygen sensor 76 and a signal of the downstream oxygen sensor 77. When the controller determines that the purification capability of the main catalyst 62a has become lower than a predetermined level, the controller sends a signal to the display 14. A warning lamp (not illustrated) of the display 14 is turned on. This prompts the rider to replace the main catalyst 62a. The controller controls an ignition timing which is a timing at which the ignition plug 31 discharges electricity. Furthermore, the controller controls electric conduction to the starter motor (not illustrated) so as to control the start of the engine unit 11.

The motorcycle 1 of the present embodiment having been described above has the following characteristics.

When viewed in the left-right direction, at least a part of the catalyst portion 62 is provided between the engine main body 20 and the front wheel unit 2. The catalyst portion 62 is provided so that the flow direction of the exhaust gas flowing therein is along the up-down direction. Due to this, the catalyst portion 62 is provided by utilizing an empty space between the engine main body 20 and the front wheel unit 2. Due to this, even when the main catalyst 62a is upsized to improve the exhaust gas purification performance, the increase in size of the motorcycle 1 in the up-down direction is restrained. The upstream end of the catalyst portion 62 is connected to the downstream end of the upstream exhaust passage member 61. The upstream exhaust passage member 61 is connected to at least one exhaust port 34b formed in the front surface of the engine main body 20. The at least one exhaust port 34b communicates with a plurality of combustion chambers 30. For this reason, the area of a part where the front surface of the engine main body 20 is connected to the upstream exhaust passage member 61 is large. When the area of the connecting part is large, it is possible to provide fixing tools such as bolts at long intervals. The upstream exhaust passage member 61 can therefore be firmly attached to the engine main body 20.

The upstream exhaust passage member 61 includes an upstream bended portion 61a. The upstream bended portion 61a changes the flow direction of the exhaust gas flowing therein, from the direction along the front-rear direction to the direction along the up-down direction. For this reason, the linear distance between the exhaust port 34b of the engine main body 20 and the catalyst portion 62 is shortened. Due to this, it is possible to restrain the up-down movement about the engine main body 20 exerted to the catalyst portion 62 when the catalyst portion 62 vibrates in the up-down direction. It is therefore possible to restrain the vibration of the catalyst portion 62 in the up-down direction.

The downstream end of the catalyst portion 62 is connected to the upstream end of the downstream exhaust passage member 66. The downstream exhaust passage member 66 includes a downstream bended portion 66a. The downstream bended portion 66a changes the flow direction of the exhaust gas flowing therein, from the direction along the up-down direction to the direction along the front-rear direction. Because the upstream bended portion 61a and the downstream bended portion 66a are provided, it is possible to provide the catalyst portion 62 so that the flow direction of the exhaust gas flowing therein is along the up-down direction. With this arrangement, when viewed in the up-down direction, both the center of the upstream end and the center of the downstream end of the catalyst portion 62 are close to the gravity center of the catalyst portion 62. It is therefore possible to reduce the up-down movement about the center of the upstream end or the downstream end of the catalyst portion 62, which is exerted to the catalyst portion 62, when the motorcycle 1 vibrates in the up-down direction. It is therefore possible to restrain the vibration of the catalyst portion 62 in the up-down direction.

As such, the vibration of the catalyst portion 62 in the up-down direction is restrained thanks to the shape of the exhaust passage member, in addition to the fact that the upstream exhaust passage member 61 is firmly attached to the engine main body 20. Due to this, even when the main catalyst 62a is upsized, sufficient strength for supporting the catalyst portion 62 in the up-down direction is obtained. For this reason, the increase in size of the motorcycle 1 is restrained in the up-down direction and sufficient strength for supporting the catalyst portion 62 in the up-down direction is obtained while exhaust gas purification performance by the main catalyst 62a is improved.

The engine main body 20 is provided so that the cylinder axial line Cy is along the up-down direction. This makes it easy to provide the catalyst portion 62 between the engine main body 20 and the front wheel unit 2 and arrange the flow direction of the exhaust gas in the catalyst portion 62 to be along the up-down direction. Due to this, the catalyst portion 62 is easily provided so that the up-down movement about the center of the upstream end or the downstream end of the catalyst portion 62, which is exerted to the catalyst portion 62, is reduced. It is therefore possible to further restrain the vibration of the catalyst portion 62 in the up-down direction. Due to this, even when the main catalyst 62a is further upsized, sufficient strength for supporting the catalyst portion 62 in the up-down direction is obtained. For this reason, sufficient strength for supporting the catalyst portion 62 in the up-down direction is obtained while exhaust gas purification performance by the main catalyst 62a is further improved.

A plurality of exhaust ports 34b communicating with the respective combustion chambers 30 are formed in the front surface of the engine main body 20. The total aperture area of the exhaust ports 34b is therefore large when compared to cases where only one exhaust port communicating with a plurality of combustion chambers 30 is formed in the front surface of the engine main body 20. For this reason, the area of a part where the front surface of the engine main body 20 is connected to the upstream exhaust passage member 61 is large when compared to cases where only one exhaust port is formed in the front surface of the engine main body 20. The strength for supporting the catalyst portion 62 in the up-down direction is high for this reason. Due to this, even when the main catalyst 62a is further upsized, sufficient strength for supporting the catalyst portion 62 in the up-down direction is obtained. For this reason, sufficient strength for supporting the catalyst portion 62 in the up-down direction is obtained while exhaust gas purification performance by the main catalyst 62a is further improved.

The upstream exhaust passage member 61 includes a plurality of independent exhaust passage members 64 and an upstream collective exhaust passage member 65. The upstream collective exhaust passage member 65 gathers the exhaust gas discharged from the independent exhaust passage members 64. Therefore, no passage member for merging a plurality of passage members communicating with the respective combustion chambers 30 is formed in the engine main body 20. It is assumed that a passage member for merging a plurality of passage members communicating with the respective combustion chambers 30 is formed in the engine main body 20. In such a case, the pressure of the exhaust gas exhausted from one combustion chamber 30 may obstruct the exhaust of the exhaust gas from another combustion chamber 30. The flow rate and the pressure of the exhaust gas may deteriorate. As a result, the output of the engine is decreased. As the upstream collective exhaust passage member 65 includes the plurality of independent exhaust passage members 64 and the upstream collective exhaust passage member 65, the output of the engine is improved.

At least a part of the catalyst portion 62 is provided in front of the crankcase member 20a. This makes it easy to provide the catalyst portion 62 between the engine main body 20 and the front wheel unit 2 and arrange the flow direction of the exhaust gas in the catalyst portion 62 to be along the up-down direction. It is therefore easy to provide the catalyst portion 62 so that the up-down movement about the center of the upstream end or the downstream end of the catalyst portion 62, which is exerted to the catalyst portion 62, is reduced. It is therefore possible to further restrain the vibration of the catalyst portion 62 in the up-down direction. Due to this, even when the main catalyst 62a is further upsized, sufficient strength for supporting the catalyst portion 62 in the up-down direction is obtained. For this reason, sufficient strength for supporting the catalyst portion 62 in the up-down direction is obtained while exhaust gas purification performance by the main catalyst 62a is further improved.

When viewed in the left-right direction, at least a part of the catalyst portion 62 is provided in front of the linear line La2. The linear line La2 is a linear line which is orthogonal to the cylinder axial line Cy and passes the crankshaft axis Cr when viewed in the left-right direction. This makes it easy to provide the catalyst portion 62 between the engine main body 20 and the front wheel unit 2 and arrange the flow direction of the exhaust gas in the catalyst portion 62 to be along the up-down direction. It is therefore easy to provide the catalyst portion 62 so that the up-down movement about the center of the upstream end or the downstream end of the catalyst portion 62, which is exerted to the catalyst portion 62, is reduced. It is therefore possible to further restrain the vibration of the catalyst portion 62 in the up-down direction. Due to this, even when the main catalyst 62a is further upsized, sufficient strength for supporting the catalyst portion 62 in the up-down direction is obtained. For this reason, sufficient strength for supporting the catalyst portion 62 in the up-down direction is obtained while exhaust gas purification performance by the main catalyst 62a is further improved.

### (Modification 1, which is covered by the present invention)

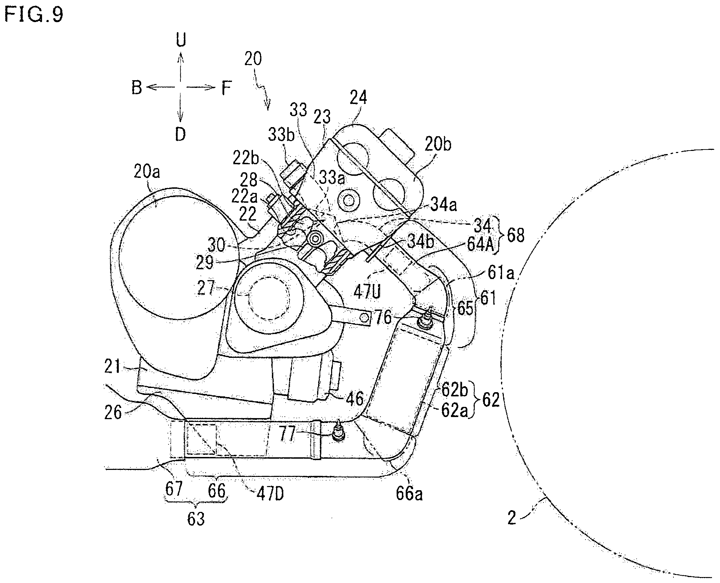

FIG. 9 is a right side view of a part of an engine unit of Modification 1 of the embodiment above. In Modification 1, members identical to those in the embodiment above are indicated by the same reference numerals and detailed descriptions thereof are omitted.

As shown in FIG. 9, an engine unit of Modification 1 includes a downstream sub-catalyst 47D and an upstream sub-catalyst 47U. In the following explanations, the upstream sub-catalyst 47U and the downstream sub-catalyst 47D may be collectively termed sub-catalysts 47 (not illustrated).

The upstream sub-catalyst 47U is provided upstream of the catalyst portion 62. The upstream sub-catalyst 47U is provided in the upstream exhaust passage member 61. The upstream sub-catalyst 47U is provided in at least one of the independent exhaust passage members 64. The upstream sub-catalyst 47U may be provided in the upstream collective exhaust passage member 65. The upstream sub-catalyst 47U may be provided in at least one of the internal exhaust passage members 34. The upstream sub-catalyst 47U is provided upstream of the upstream oxygen sensor 76. The upstream sub-catalyst 47U is preferably provided upstream of the upstream bended portion 61a. The upstream sub-catalyst 47U may be provided downstream of the upstream bended portion 61a.

The downstream sub-catalyst 47D is provided downstream of the catalyst portion 62. The downstream sub-catalyst 47D is provided in the downstream collective exhaust passage member 63. The downstream sub-catalyst 47D is provided in the downstream exhaust passage member 66. The downstream sub-catalyst 47D may be provided in the muffler member 67. The downstream sub-catalyst 47D is provided downstream of the downstream oxygen sensor 77. The downstream sub-catalyst 47D is preferably provided downstream of the downstream bended portion 66a. The downstream sub-catalyst 47D may be provided upstream of the downstream bended portion 66a.

The sub-catalysts 47 are configured to purify the exhaust gas. The sub-catalysts 47 include a catalyst material which is identical to that in the main catalyst 62a. The sub-catalysts 47 may have a porous structure in the same manner as the main catalyst 62a. The sub-catalysts 47 may not have a porous structure. The following is an example of a sub-catalyst 47 which does not have a porous structure. For example, the sub-catalyst 47 solely includes a catalyst material which is adhered to the inner surface of the downstream collective exhaust passage member 63. In this case, the base to which the catalyst material of the sub-catalyst 47 is adhered is the downstream collective exhaust passage member 63. The following is another example of a sub-catalyst 47 which does not have a porous structure. For example, a sub-catalyst 47 is structured by arranging a catalyst material to be adhered to a plate-shaped base. The cross-sectional shape of the plate-shaped base cut along the direction orthogonal to the flow direction of the exhaust gas is, for example, circular, C-shaped, or S-shaped.

According to Modification 1, the main catalyst 62a purifies the exhaust gas most in the plurality of exhaust paths 69. In other words, the main catalyst 62a purifies more the exhaust gas discharged from the combustion chamber 30 in the exhaust paths 69 than the sub-catalysts 47. To put it differently, the degree of the contribution of the sub-catalysts 47 to the purification of the exhaust gas is lower than that of the main catalyst 62a. The degree of the contribution to the purification of each of the main catalyst 62a, the upstream sub-catalyst 47U, and the downstream sub-catalyst 47D may be measured by the following method.

The engine unit of Modification 1 is driven, and in a warm-up state, the density of harmful substances in the exhaust gas discharged from the atmosphere discharge port 67a is measured. The warm-up state indicates a state in which the temperature of the engine main body 20 is sufficiently high. The method of measuring the exhaust gas is in compliance with European regulations. When the engine unit is in the warm-up state, the main catalyst 62a and the sub-catalysts 47 are hot and activated. The main catalyst 62a and the sub-catalysts 47 can therefore sufficiently exert their purification performances in the warm-up state.

Subsequently, the downstream sub-catalyst 47D is detached from the engine unit of Modification 1 and only the base of the downstream sub-catalyst 47D is provided in place of the downstream sub-catalyst 47D. The engine unit in this state is assumed to be a measurement engine unit A. This measurement engine unit A is driven, and the density of harmful substances in the exhaust gas discharged from the atmosphere discharge port 67a is measured in the warm-up state.

The downstream sub-catalyst 47D may be arranged such that the catalyst material is directly adhered to the inner surface of the downstream collective exhaust passage member 63. In this case, "only the base of the downstream sub-downstream sub-catalyst 47D is provided" indicates that no catalyst material is adhered to the inner surface of the downstream collective exhaust passage member 63.

Subsequently, the main catalyst 62a is detached from the measurement engine unit A, and only the base of the main catalyst 62a is provided in place of the main catalyst 62a. The engine unit in this state is assumed to be a measurement engine unit B. This measurement engine unit B is driven, and the density of harmful substances in the exhaust gas discharged from the atmosphere discharge port 67a is measured in the warm-up state.

Subsequently, the upstream sub-catalyst 47U is detached from the measurement engine unit B, and only the base of the upstream sub-catalyst 47U is provided in place of the upstream sub-catalyst 47U. The engine unit in this state is assumed to be a measurement engine unit C. This measurement engine unit C is driven, and the density of harmful substances in the exhaust gas discharged from the atmosphere discharge port 67a is measured in the warm-up state.

The measurement engine unit C includes neither the main catalyst 62a nor the sub-catalysts 47. The measurement engine unit B includes the upstream sub-catalyst 47U but does not include the main catalyst 62a and the downstream sub-catalyst 47D. The measurement engine unit A includes the main catalyst 62a and the upstream sub-catalyst 47U but does not include the downstream sub-catalyst 47D. Due to this, the degree of the contribution to the purification of the downstream sub-catalyst 47D is calculated from a difference between a measurement result of the engine unit of Modification 1 and a measurement result of the measurement engine unit A. Furthermore, the degree of the contribution to the purification of the main catalyst 62a is calculated from a difference between a measurement result of the measurement engine unit A and a measurement result of the measurement engine unit B. Furthermore, the degree of the contribution to the purification of the upstream sub-catalyst 47U is calculated from a difference between a measurement result of the measurement engine unit B and a measurement result of the measurement engine unit C.

The main catalyst 62a purifies the exhaust gas most in the plurality of exhaust paths 69. As long as this condition is satisfied, the purification capability of the sub-catalysts 47 may be lower than or higher than the purification capability of the main catalyst 62a. A state in which the purification capability of the sub-catalysts 47 is lower than the purification capability of the main catalyst 62a indicates the following state. That is to say, the exhaust gas discharged from the atmosphere discharge port 67a when only a sub-catalyst is provided is purified more than the exhaust gas discharged from the atmosphere discharge port 67a when only the main catalyst 62a is provided.

The upstream catalyst deteriorates more rapidly than the downstream catalyst. For this reason, when hours of use become high, the magnitude correlation between the degree of the contribution to the purification of the main catalyst 62a and the degree of the contribution to the purification of the downstream sub-catalyst 47D may be reversed. For this reason, the state in which the degree of the contribution to the purification of the main catalyst 62a is higher than that of the downstream sub-catalyst 47D is defined as below. That is to say, this state is a state in which, when the running distance has not reached a predetermined distance (e.g., 1000km), the degree of the contribution to the purification of the main catalyst 62a is higher than that of the downstream sub-catalyst 47D.

The volume of the main catalyst 62a is preferably larger than the volume of the sub-catalyst 47. The surface area of the main catalyst 62a is preferably larger than the surface area of the sub-catalyst 47. The amount of noble metals in the main catalyst 62a is preferably larger than the amount of noble metals in the sub-catalyst.

The engine unit may include only one of the upstream sub-catalyst 47U and the downstream sub-catalyst 47D. In such a case, the degree of the contribution to purification can be calculated by a method which is a modification of the method above, wherein in said modification is covered by the present invention.

According to Modification 1, with the downstream sub-catalyst 47D, the main catalyst 62a is downsized while the exhaust gas purification performance is maintained, when compared to cases where the downstream sub-catalyst 47D is not provided. Due to this, the exhaust gas purification performance of the catalyst (62a, 47D) is improved while the increase in size of the motorcycle 1 in the front-rear direction is restrained. Furthermore, because the catalyst portion 62 is short in the up-down direction, the exhaust gas purification performance of the catalyst (62a, 47D) is improved while the increase in size of the motorcycle 1 in the up-down direction is further restrained.

The downstream sub-catalyst 47D is provided downstream of the downstream bended portion 66a in the flow direction of the exhaust gas. To put it differently, the downstream sub-catalyst 47D is not provided at a part from the upstream end to the downstream bended portion 66a of the downstream exhaust passage member 66. Due to this, the downstream exhaust passage member 66 is not elongated in the up-down direction even when the downstream sub-catalyst 47D is provided. The distance between the downstream exhaust passage member 66 and the ground is therefore sufficient even when the downstream sub-catalyst 47D is provided. Due to this, the exhaust gas purification performance of the catalyst (62a, 47D) is improved while the increase in size of the motorcycle 1 in the up-down direction is further restrained.

In addition, with the upstream sub-catalyst 47U, the main catalyst 62a is downsized while the exhaust gas purification performance is maintained, when compared to cases where the upstream sub-catalyst 47U is not provided. Due to this, the exhaust gas purification performance of the catalyst (62a, 47U) is improved while the increase in size of the motorcycle 1 in the front-rear direction is further restrained. Furthermore, because the catalyst portion 62 is short in the up-down direction, the exhaust gas purification performance of the catalyst (62a, 47U) is improved while the increase in size of the motorcycle 1 in the up-down direction is further restrained.

The upstream sub-catalyst 47U is provided upstream of the upstream bended portion 61a in the flow direction of the exhaust gas. To put it differently, the upstream sub-catalyst 47U is not provided at a part from the upstream bended portion 61a to the downstream end of the upstream exhaust passage member 61. Due to this, the upstream exhaust passage member 61 is not elongated in the up-down direction even when the upstream sub-catalyst 47U is provided. The distance between the upstream exhaust passage member 61 and the ground is therefore sufficient even when the upstream sub-catalyst 47U is provided. Due to this, the exhaust gas purification performance of the catalyst (62a, 47U) is improved while the increase in size of the motorcycle 1 in the up-down direction is further restrained.

### (Modification 2 which is not covered by the present invention)

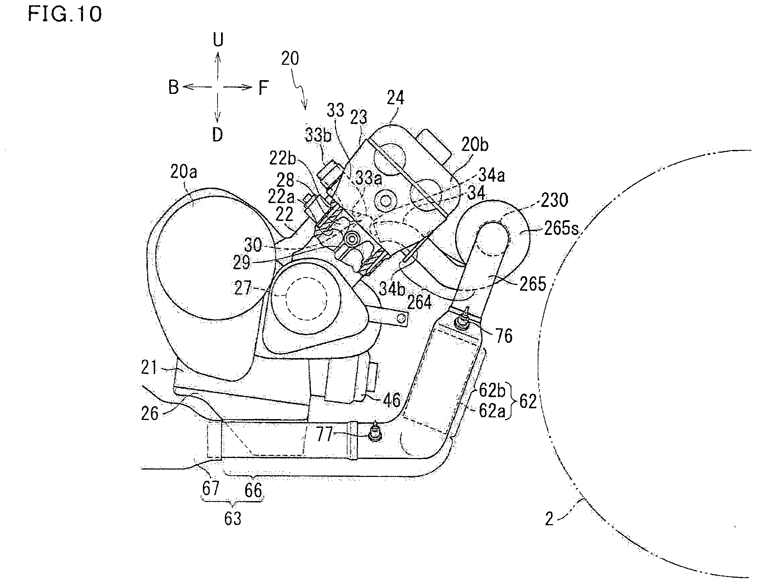

FIG. 10 is a right side view of a part of an engine unit of Modification 2 which is not covered by the present invention. However, in Modification 2, members identical to those in the embodiment above are indicated by the same reference numerals and detailed descriptions thereof are omitted.

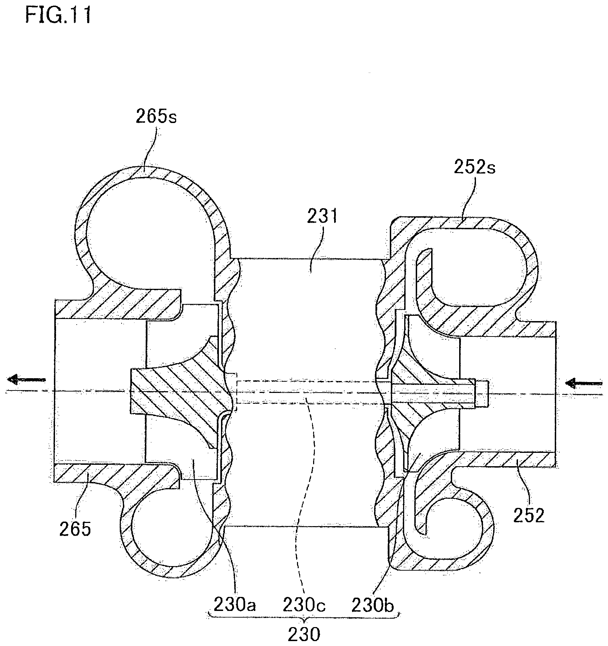

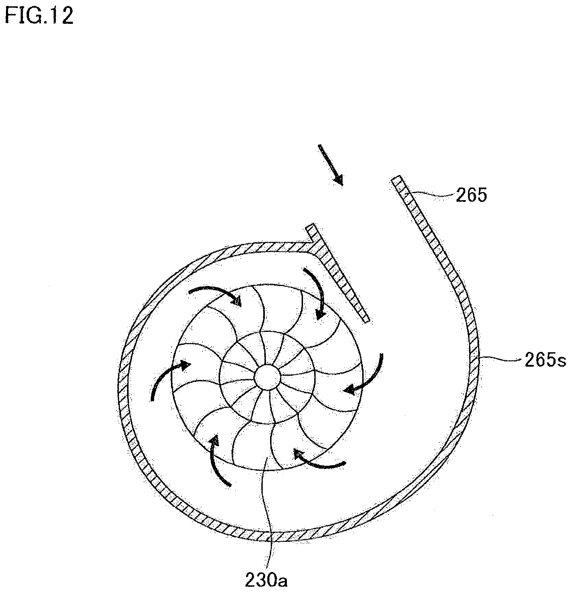

As shown in FIG. 10, an engine unit of Modification 2 which is not covered by the present invention includes a turbocharger 230. As shown in FIG. 11 which is not covered by the present invention, the turbocharger 230 includes a turbine wheel 230a, a compressor wheel 230b, and a connecting shaft 230c. The turbine wheel 230a is connected to the compressor wheel 230b via the connecting shaft 230c. The turbine wheel 230a is provided in an upstream collective exhaust passage member 265. The upstream collective exhaust passage member 265 is connected to the downstream ends of three independent exhaust passage members 264. The upstream collective exhaust passage member 265 and the independent exhaust passage members 264 are provided in place of the upstream collective exhaust passage member 65 and the independent exhaust passage members 64 of the example above. The example compressor wheel 230b is provided in an intake passage member 252. The intake passage member 252 is provided in place of the intake passage member 52 of the example above. The connecting example shaft 230c is housed in a center housing 231. The center housing 231 is connected to the upstream collective exhaust passage member 265 and the intake passage member 252. The connecting shaft 230c is rotatably supported by the center housing 231. The upstream collective exhaust passage member 265 includes a scroll exhaust passage member 265s. As shown in FIG. 12 which is not covered by the present invention, the scroll exhaust passage member 265s is formed to surround the outer circumference of the turbine wheel 230a. The intake passage member 252 includes a scroll intake passage member 252s. The scroll intake passage member 252s is formed to surround the outer circumference of the compressor wheel 230b. The exhaust gas in the scroll exhaust passage member 265s is blown onto the outer periphery of the turbine wheel 230a. As a result of this, the turbine wheel 230a rotates. The exhaust gas blown onto the outer periphery of the turbine wheel 230a is discharged from the turbine wheel 230a in the direction along the central axis of the connecting shaft 230c. In accordance with the rotation of the turbine wheel 230a, the compressor wheel 230b rotates. As a result, the compressor wheel 230b sucks air in the direction along the central axis of the connecting shaft 230c. The sucked air is compressed by the compressor wheel 230b. The compressed air is discharged from the outer periphery of the compressor wheel 230b to the scroll intake passage member 252s.

According to Modification 2, compressed air is supplied to the combustion chamber 30 thanks to the turbocharger 230. The intake efficiency is therefore improved. As a result, the output of the engine is improved. Furthermore, because compressed air is supplied to the combustion chamber 30, the cubic capacity of the engine main body 20 can be decreased. The fuel consumption is therefore decreased. Furthermore, the engine main body 20 is downsized. It is therefore possible to further restrain the increase in size of the vehicle in the up-down direction.

The scroll exhaust passage member 265s shown in FIG. 11 is of a single-scroll type in which only one port is provided to introduce exhaust gas. The scroll exhaust passage member may be of a twin-scroll type in which two ports are provided to introduce exhaust gas. The following will describe this with the assumption that the number of combustion chambers 30 is two. The twin-scroll-type scroll exhaust passage member includes a first scroll passage member and a second scroll passage member. The first scroll passage member and the second scroll passage member are formed in two independent exhaust passage members 264, respectively. The turbine wheel 230a is provided in an upstream collective exhaust passage member 265. The first scroll passage member and the second scroll passage member are arranged to be side by side in the direction along the central axis of the connecting shaft 230c. The exhaust gas in the first scroll passage member and the exhaust gas in the second scroll passage member are blown onto the outer periphery of the turbine wheel 230a. The flows of the exhaust gas discharged from the two scroll passage members are gathered (merged) when passing the turbine wheel 230a. With the twin-scroll-type scroll exhaust passage member, the path length of the independent exhaust passage member 264 is elongated. Due to this, it is possible to prevent the discharge of the exhaust gas from one combustion chamber 30 from being obstructed by the pressure of the exhaust gas discharged from another combustion chamber 30. It is therefore possible to prevent the decrease in the flow rate and pressure of the exhaust gas. The decrease in the output of the engine is prevented for this reason. Furthermore, because the decrease in the flow rate and pressure of the exhaust gas is prevented, the decrease in the rotation speed of the turbine wheel 230a is prevented. The decrease in the intake efficiency is prevented for this reason. When the decrease in the intake efficiency is prevented, the increase in the fuel consumption is prevented and the decrease in the output of the engine is prevented.

When the number of combustion chambers 30 is three or more, the exhaust gas discharged from two or more combustion chambers 30 flows in at least one of the first scroll passage member and the second scroll passage member. For example, when the number of combustion chambers 30 is four, only the exhaust gas discharged from two combustion chambers 30 flows in each scroll passage member. In this case, the exhaust gas discharged from the two combustion chambers 30 is gathered while the exhaust gas flows from the two combustion chambers 30 to the first scroll passage member. Similarly, the exhaust gas discharged from the two combustion chambers 30 is gathered while the exhaust gas flows from the remaining two combustion chambers 30 to the second scroll passage member. The upstream end of an exhaust passage member which gathers exhaust gas discharged from the two combustion chambers 30 may be provided inside the engine main body 20 or outside the engine main body 20.

A preferred embodiment of the present invention has been described. It should be noted that the present invention is not limited to the above-described embodiments and modification 1, and various changes, substitutions, and alterations can be made herein without departing from the scope of the invention as defined by the appended claims. Further, modifications described below may be used in combination as needed. For example, the term "preferably" or "preferable" herein is non-exclusive and means "preferably/preferable, but not limited to."

In the embodiment above, the crankcase 21 and the cylinder body 22 are different members. Alternatively, the crankcase and the cylinder body may be integrally formed. In the embodiment above, the cylinder body 22, the cylinder head 23, and the head cover 24 are different members. Alternatively, two or three of the cylinder body, the cylinder head, and the head cover may be integrally formed. In the embodiment above, the crankcase 21 and the oil pan 26 are different members. Alternatively, the crankcase and the oil pan may be integrally formed.

In the embodiment above, the exhaust device 60 is fixed to another member only at the upstream ends of the independent exhaust passage members 64 and the bracket 67b of the muffler member 67. In this regard, the exhaust device 60 may be fixed to another member at a part other than these parts. For example, the catalyst portion 62 may be fixed to the engine main body 20.

In the embodiment above, the cross-sectional area of the main catalyst 62a cut along the direction orthogonal to the flow direction of the exhaust gas is circular. The cross-sectional shape of the main catalyst 62a, however, is not limited to circular. The cross-sectional shape of the main catalyst 62a may be elliptic and long in the left-right direction. In other words, the cross-sectional shape may be flat. The cross-sectional shape of the catalyst portion 62 is preferably analogous to the cross-sectional shape of the main catalyst 62a.

When the sub-catalyst 47 has a porous structure, this modification may be employed in the sub-catalyst 47.

In the embodiment above, the length Dc1 of the catalyst portion 62 is longer than the length Dc2 of the catalyst portion 62. In this regard, the length Dc1 of the catalyst portion 62 may be shorter than the length Dc2 of the catalyst portion 62. The length Dc1 is the length of the catalyst portion 62 along the flow direction of the exhaust gas. The length Dc2 is the maximum length of the catalyst portion 62 in the direction orthogonal to the flow direction of the exhaust gas.

The main catalyst 62a may include a plurality of catalysts provided to be close to one another. Each catalyst includes a base and a catalyst material. Providing a plurality of catalysts to be close to one another indicates the following state. That is to say, catalysts are close to one another in the sense that the distance between neighboring catalysts is short, rather than the length of each catalyst is short in the flow direction of the exhaust gas. The bases of the catalysts may be formed of the same or different materials. The catalyst materials of the catalysts may be the same or different noble metals.

This modification may be employed in the sub-catalyst 47.

In the embodiment above, the exhaust device 60 is arranged so that the catalyst portion 62 is disposed at a right part of the motorcycle 1. Alternatively, the exhaust device 60 may be arranged so that the catalyst portion 62 is disposed at a left part of the motorcycle 1. In this case, the muffler member 67 is preferably disposed at a left part of the motorcycle 1, too. The exhaust device 60 may be arranged so that the central axis C2 of the catalyst portion 62 is provided at the center C0 in the left-right direction of the motorcycle 1. Furthermore, the exhaust device 60 may be arranged so that the center of the upstream end and the center of the downstream end of the catalyst portion 62 are positioned on the respective sides of the center C0 in the left-right direction of the motorcycle 1.

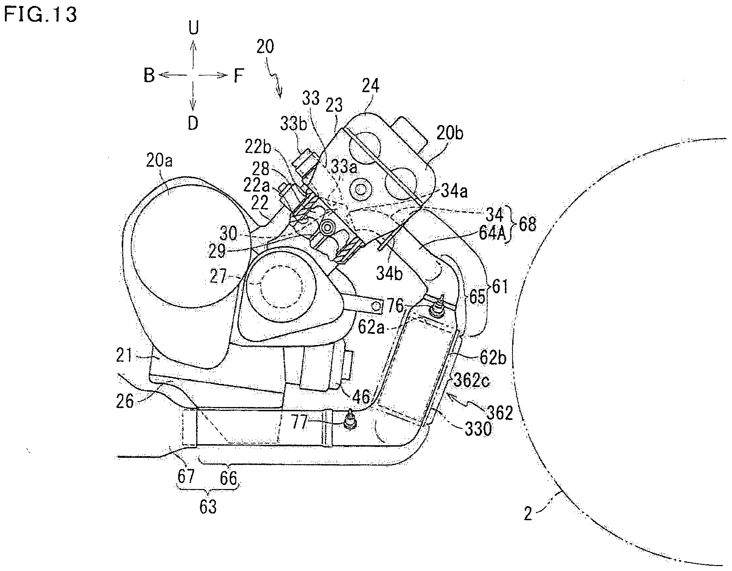

As shown in FIG. 13, at least a part of the outer surface of the cylindrical part 62b may be covered with a catalyst protector 330. In the catalyst protector 330, a part covering the outer surface of the cylindrical part 62b is termed a catalyst protector portion 362c. The catalyst protector portion 362c is included in a catalyst portion 362. A part of the catalyst protector 330 may be included in the upstream collective exhaust passage member 65. A part of the catalyst protector 330 may be included in the downstream exhaust passage member 66. The catalyst protector portion 362c may or may not be cylindrical in shape. When the catalyst protector portion 362c is provided, the heat keeping effect of the main catalyst 62a is improved. As a result, at the cold start of the engine unit, the time required to activate the deactivated main catalyst 62a is further shortened. Due to this, the exhaust gas purification performance of the main catalyst 62a is further improved. Furthermore, the catalyst protector portion 362c protects the cylindrical part 62b and the main catalyst 62a. Furthermore, the catalyst protector portion 362c improves the appearance.

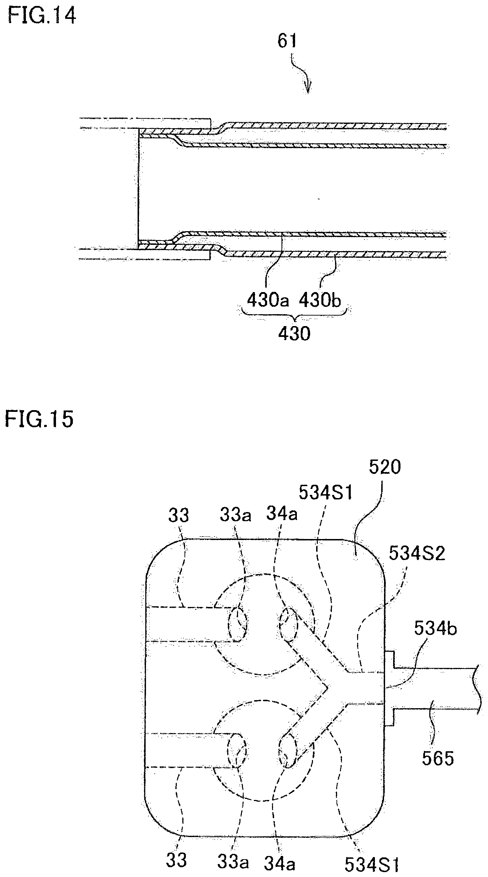

At least a part of the upstream exhaust passage member 61 may be formed of a multi-walled pipe. The multi-walled pipe is constituted by an inner pipe and at least one outer pipe covering the inner pipe. As shown in FIG. 14, the multi-walled pipe may be a double-walled pipe 430. The double-walled pipe 430 includes an inner pipe 430a and an outer pipe 430b. The both end portions of the inner pipe 430a are in contact with the both end portions of the outer pipe 430b. The inner pipe 430a and the outer pipe 430b may be in contact with each other at a part other than the both end portions. For example, the inner pipe 430a and the outer pipe 430b may be in contact with each other at a bended portion. The multi-walled pipe 430 restrains the decrease in the temperature of the exhaust gas in the upstream exhaust passage member 61. As a result, at the cold start of the engine unit 11, the time required to activate the deactivated main catalyst 62a is shortened. Due to this, the exhaust gas purification performance of the main catalyst 62a is further improved. Furthermore, because at least a part of the upstream exhaust passage member 61 is formed of the multi-walled pipe 430, the strength of the upstream exhaust passage member 61 is improved. It is therefore possible to further restrain the vibration of the catalyst portion 62 in the up-down direction. Due to this, even when the main catalyst 62a is further upsized, sufficient strength for supporting the catalyst portion 62 in the up-down direction is obtained. For this reason, sufficient strength for supporting the catalyst portion 62 in the up-down direction is obtained while exhaust gas purification performance by the main catalyst 62a is further improved.

The exhaust device 60 may include two muffler members 67 for one catalyst portion 62. In other words, the exhaust device 60 may include two atmosphere discharge ports 67a for one catalyst portion 62. In this case, the downstream exhaust passage member 66 is branched into two. The two muffler members 67 are provided to be side by side in the up-down direction. Alternatively, the two muffler members 67 are disposed at a right part and a left part of the motorcycle 1, respectively.

In the embodiment above, the number of exhaust ports 34b is identical to the number of combustion chambers 30 in the engine main body 20. In this regard, when a plurality of combustion chamber exhaust ports 34a are provided for one combustion chamber 30, the number of exhaust ports 34b may be larger than the number of combustion chambers 30.

The number of exhaust ports 34b may be smaller than the number of combustion chambers 30. The number of exhaust ports 34b is at least one. In this case, the exhaust gas discharged from the combustion chambers 30 is gathered inside the engine main body 20. To be more specific, as shown in FIG. 15 which is not covered by the present invention, an engine main body 520 includes a plurality of internal independent exhaust passage members 534S1 and an internal collective exhaust passage member 534S2. The plurality of internal independent exhaust passage members 534S1 are connected to the combustion chambers 30, respectively. The internal collective exhaust passage member 534S2 is connected to the downstream ends of the internal independent exhaust passage members 534S1. The internal collective exhaust passage member 534S2 gathers the exhaust gas discharged from the internal independent exhaust passage members 534S1. The exhaust port 534b is at the downstream end of the internal collective exhaust passage member 534S2. The internal collective exhaust passage member 534S2 is connected to the upstream end of the upstream collective exhaust passage member 565. A plurality of independent exhaust passage members 64 are not provided. According to this modification, which is not covered by the present invention, the length of a path where only the exhaust gas discharged from one combustion chamber 30 passes is shortened. Due to this, the area of an internal surface of a passage member from the combustion chambers 30 to the catalyst portion 62 is decreased. Due to this, the heat capacity of the passage members from the combustion chambers 30 to the catalyst portion 62 is decreased. The temperature of the exhaust gas flowing into the catalyst portion 62 is therefore increased. As a result, at the cold start of the engine unit 11, the time required to activate the deactivated main catalyst 62a is shortened. Due to this, the exhaust gas purification performance of the main catalyst 62a is improved.

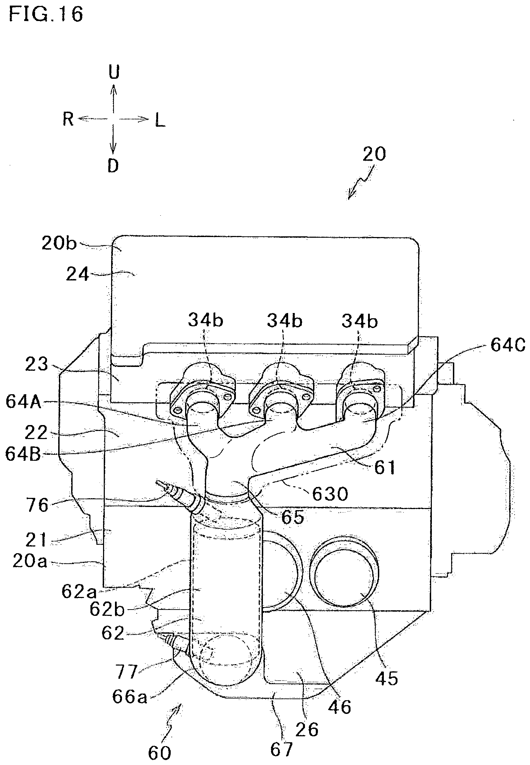

The engine unit 11 may be arranged such that the exhaust gas is cooled by coolant water in a passage member from the combustion chamber 30 to the catalyst portion 62. In other words, the engine unit 11 may include an exhaust gas cooling passage member in which coolant water for cooling the exhaust gas flows. For example, as shown in FIG. 16 which is covered by the present invention, at least a part of the exhaust gas cooling passage member 630 may be formed at the outer periphery of at least a part of the upstream collective exhaust passage member 65. Alternatively, for example, as shown in FIG. 16, at least a part of the exhaust gas cooling passage member 630 may be formed at the outer periphery of at least a part of each of the independent exhaust passage members 64. At least a part of the exhaust gas cooling passage member may be formed at the outer periphery of at least a part of each of the internal exhaust passage members 34. The coolant water flowing in the exhaust gas cooling passage member may be shared with or different from the coolant water for cooling the engine main body 20. The cooling of the exhaust gas may be carried out by means of a cooling medium other than water, instead of the coolant water. From the cold start of the engine unit 11 to a predetermined timing, the coolant water in the exhaust gas cooling passage member is preferably not circulated. In other words, the exhaust gas is preferably not to be cooled by the coolant water during this period. The predetermined timing is determined based on, for example, an elapsed time, the total rotation number of the crankshaft 27, or the temperature of the exhaust gas. According to this modification which is covered by the present invention, because the exhaust gas is cooled by the coolant water, excessive increase in the temperature of the exhaust gas flowing into the catalyst portion 62 is prevented. It is therefore possible to prevent the deterioration of the main catalyst 62a due to excessive heating. Due to this, the exhaust gas purification performance of the main catalyst 62a is further improved. Furthermore, when at least a part of the exhaust gas cooling passage member is formed at the outer periphery of at least a part of the upstream collective exhaust passage member 65, the following effect is obtained. The exhaust gas cooling passage member is downsized when compared to cases where the exhaust gas cooling passage member is not provided at the outer periphery of the upstream collective exhaust passage member 65 but provided at the outer periphery of each of the independent exhaust passage members 68. It is therefore possible to restrain the increase in size of the vehicle in the up-down direction and the front-rear direction.

An exhaust gas cooling passage member may be applied to the modification shown in FIG. 15 and which is not covered by the present invention. At least a part of the exhaust gas cooling passage member may be formed at the outer periphery of at least a part of the upstream collective exhaust passage member 565. At least a part of the exhaust gas cooling passage member may be formed at the outer periphery of at least a part of the internal collective exhaust passage member 534S2. At least a part of the exhaust gas cooling passage member may be formed at the outer periphery of at least a part of each of the internal independent exhaust passage members 534S1. According to this modification which is not covered by the present invention, because the exhaust gas is cooled by the coolant water, excessive increase in the temperature of the exhaust gas flowing into the catalyst portion 62 is prevented. It is therefore possible to prevent the deterioration of the main catalyst 62a due to excessive heating. Due to this, the exhaust gas purification performance of the main catalyst 62a is further improved. Furthermore, when at least a part of the exhaust gas cooling passage member is formed at the outer periphery of at least a part of the internal collective exhaust passage member 534S2, the following effect is obtained. The exhaust gas cooling passage member is downsized when compared to cases where the exhaust gas cooling passage member is not provided at the internal collective exhaust passage member 534S2 but provided at the outer periphery of each of the internal independent exhaust passage members 534S1. It is therefore possible to restrain the increase in size of the engine main body in the up-down direction and the front-rear direction. Due to this, it is possible to restrain the increase in size of the vehicle in the up-down direction and the front-rear direction.

The combustion chamber 30 may include a main combustion chamber and an auxiliary combustion chamber connected to the main combustion chamber. In this case, one combustion chamber of the present teaching is formed of the main combustion chamber and the auxiliary combustion chamber.

In the embodiment above, the engine main body 20 includes three combustion chambers 30. The number of combustion chambers 30 in the engine main body 20 may be two, four, or more than four.

When the number of combustion chambers 30 is four or more, a plurality of catalyst portions 62 may be provided. Only the exhaust gas discharged from one or some of the combustion chambers 30 may be allowed to pass one catalyst portion 62. This arrangement will be explained with the assumption that the number of combustion chambers 30 is four. The exhaust device 60 includes a plurality of independent exhaust passage members, two upstream collective exhaust passage members, two catalyst portions, and two downstream collective exhaust passage members. The first upstream collective exhaust passage member gathers the exhaust gas discharged from the right two combustion chambers 30. The second upstream collective exhaust passage member gathers the exhaust gas discharged from the left two combustion chambers 30. The first catalyst portion is connected to the downstream end of the first upstream collective exhaust passage member and the upstream end of the first downstream collective exhaust passage member. The first catalyst portion is connected to the downstream end of the second upstream collective exhaust passage member and the upstream end of the second downstream collective exhaust passage member. Each of the first downstream collective exhaust passage member and the second downstream collective exhaust passage member has an atmosphere discharge port. In this case, the passage member which is a combination of the two independent exhaust passage members and the first upstream collective exhaust passage member and the first catalyst portion are equivalent to the upstream exhaust passage member and the catalyst portion of the present teaching. Furthermore, the passage member which is a combination of the two independent exhaust passage members and the second upstream collective exhaust passage member and the second catalyst portion are equivalent to the upstream exhaust passage member and the catalyst portion of the present teaching.

When the number of combustion chambers 30 is four or more, the engine main body 20 may be a so-called V engine. For example, a V4 engine has four combustion chambers, and two combustion chambers are provided in a front side whereas the remaining two combustion chambers are provided in a rear side. The combustion chambers provided in the front part of the V engine are termed front combustion chambers. The front combustion chambers are side by side in the left-right direction. The combustion chambers provided in the rear part of the V engine are termed rear combustion chambers. The rear combustion chambers are side by side in the left-right direction. A cylinder hole forming a part of the front combustion chamber is termed a front cylinder hole. The direction of the central axis of the front cylinder hole is identical to the direction of the cylinder axial line Cy. Each front combustion chamber communicates with the internal exhaust passage member 34, the upstream exhaust passage member 61, the catalyst portion 62, and the downstream collective exhaust passage member 63. The front combustion chambers are encompassed in the plurality of combustion chambers of the present teaching. The rear combustion chamber is not encompassed in the plurality of combustion chambers of the present teaching.

When the engine main body 20 is a V engine, the exhaust gas discharged from the rear combustion chambers may be merged with the exhaust gas discharged from the front combustion chambers. For example, the downstream end of an exhaust passage member communicating with the rear combustion chambers may be connected to the upstream collective exhaust passage member 65. In this case, the exhaust gas discharged from the rear combustion chamber is purified by the main catalyst 62a. For example, the downstream end of an exhaust passage member communicating with the rear combustion chamber may be connected to the downstream exhaust passage member 66. In this case, a catalyst for purifying the exhaust gas discharged from the rear combustion chambers is provided in addition to the main catalyst 62a.

When the engine main body 20 is a V engine, the exhaust gas discharged from the rear combustion, chambers may not be merged with the exhaust gas discharged from the front combustion chambers. In this case, a catalyst for purifying the exhaust gas discharged from the rear combustion chambers is provided in addition to the main catalyst 62a.

The inclination angle θcy of the cylinder axial line Cy with respect to the up-down direction is 0 degrees or greater than 0 degrees and 45 degrees or less than 45 degrees, when viewed in the left-right direction. The inclination angle θcy may be greater than 45 degrees. The inclination angle θcy is 90 degrees or less than 90 degrees. In other words, the cylinder axial line Cy may be along the front-rear direction when viewed in the left-right direction.

In the embodiment above, the cylinder axial line Cy is inclined with a positive slope in the forward direction. Alternatively, the cylinder axial line Cy may be inclined with a negative slope in the forward direction. In other words, the cylinder portion 20b may be tilted rearward.

In the embodiment above, the positions of the downstream ends of the independent exhaust passage members 64 are substantially identical to one another. Alternatively, in the flow direction of the exhaust gas flowing in the upstream collective exhaust passage member 65, the downstream end of one independent exhaust passage member 64 may be downstream of the downstream end of another independent exhaust passage member 64. In this case, the upstream oxygen sensor 76 is preferably provided downstream of the downstream ends of all independent exhaust passage members 64.

In the example above, the gas flowing in the exhaust path 69 during the driving of the engine unit 11 is only the exhaust gas discharged from the combustion chamber 30. The engine unit 11, however, may include a secondary air supply mechanism configured to supply air to the exhaust path 69. A known arrangement is employed for the specific arrangement of the secondary air supply mechanism. The secondary air supply mechanism may forcibly supply air to the exhaust path 69 by means of an air pump. The secondary air supply mechanism may take air into the exhaust path 69 by a negative pressure in the exhaust path 69. In this case, the secondary air supply mechanism includes a reed valve which is opened and closed in accordance with a pressure change in the exhaust path 69. When the secondary air supply mechanism is included, the upstream oxygen sensor 76 may be provided upstream or downstream of a position of air inflow.

The engine unit of the straddled vehicle in which the present teaching is employed may be an air-cooled engine. The engine unit of the straddled vehicle in which the present teaching is employed may be a natural air-cooled engine unit or a forced air-cooled engine unit.

The applications of the present teaching are not limited to motorcycles. The present teaching may be applied to a leaning vehicle which is not a motorcycle. The leaning vehicle is a vehicle including a vehicle body frame which is configured to lean rightward of the vehicle when turning right and lean leftward of the vehicle when turning left. The present teaching may be applied to a straddled vehicle which is not a motorcycle. The straddled vehicle indicates all types of vehicles on which a rider straddles a vehicle on a saddle. The straddled vehicle to which the present teaching is applicable encompasses vehicles such as motorcycles, tricycles, and four-wheeled buggies (ATVs: All Terrain Vehicles). The front wheel unit of the present teaching may include a plurality of front wheels. The rear wheel unit of the present teaching may include a plurality of rear wheels.

Japanese Patent Application No. 2015-157520, which is one of the basic or priority applications of the subject application, is termed a basic application 1. Japanese Patent Application No. 2014-256984, which is one of the basic or priority applications of the subject application, is termed a basic application 2. The water cooling device 40 of the present specification is equivalent to a water cooler 40 in the basic application 2. The intake device 50 of the present specification is equivalent to an intake device 50 in the basic application 2. The exhaust device 60 of the present specification is equivalent to an exhaust unit 60 in the basic application 2. The crankcase 21 of the present specification is equivalent to a crankcase main body 25 of the basic applications 1 and 2. The internal intake passage member 33 of the present specification is equivalent to a structure forming an intake passage 33 in the basic applications 1 and 2. The internal exhaust passage member 34 of the present specification is equivalent to a structure forming an exhaust path 34 in the basic applications 1 and 2. The branched intake passage member 51 of the present specification is equivalent to a structure forming a branched intake passage 51 in the basic applications 1 and 2. The main catalyst 62a of the present specification is equivalent to a catalyst 68 in the basic application 1. The main catalyst 62a of the present specification is equivalent to an engine-frontward catalyst 64 in the basic application 2. The catalyst portion 62 of the present specification is equivalent to an engine-frontward catalyst unit 69 in the basic application 2. The independent exhaust passage member 64A of the present specification is equivalent to a first exhaust passage member 65 (independent exhaust passage member 65) of the basic application 1. The independent exhaust passage member 64A of the present specification is equivalent to a structure forming a first exhaust passage 65 (independent exhaust passage 65) in the basic application 2. The independent exhaust passage member 64B of the present specification is equivalent to an independent exhaust passage member 66A of the basic application 1. The independent exhaust passage member 64B which is included in the second exhaust passage member 56B is equivalent to a structure forming an independent exhaust passage member 66A in the basic application 2. The independent exhaust passage member 64C of the present specification is equivalent to a third exhaust passage member 67 (independent exhaust passage member 67) of the basic application 1. The independent exhaust passage member 64C of the present specification is equivalent to a structure forming a third exhaust passage 67 (independent exhaust passage 67) in the basic application 2. The mounting flange portions 56Af, 56Bf, and 56Cf of the present specification are equivalent to mounting portions 65a, 66a, and 67a of the basic application 1. The upstream collective exhaust passage member 65 of the present specification is equivalent to a structure forming an upstream collective exhaust passage 68 in the basic application 2. The downstream collective exhaust passage member 63 of the present specification is equivalent to a structure forming a downstream collective exhaust passage member 70 in the basic application 2. The upstream sub-catalyst 47U of the present specification is equivalent to a front sub-catalyst 68F of the basic application 1. The downstream sub-catalyst 47D of the present specification is equivalent to a rear sub-catalyst 68R of the basic application 1. The upstream oxygen sensor 76 of the present specification is equivalent to a front oxygen sensor 76 in the basic applications 1 and 2. The downstream oxygen sensor 77 of the present specification is equivalent to a rear oxygen sensor 77 in the basic applications 1 and 2. It is noted that the terms in the present specification may be equivalent to different terms in the basic applications 1 and 2 from the terms above.

In the specification of the present teaching, the phrase that the upstream collective exhaust passage member 65 merges the exhaust gas discharged from the three independent exhaust passage members 64 indicates that the exhaust gas discharged from the three independent exhaust passage members 64 can be merged. However, the exhaust gas discharged from the three independent exhaust passage members 64 may not be mixed. As described above, the combustion process is carried out at different timings in the three combustion chambers 30. Due to this, the exhaust gas discharged from the three combustion chambers 30 may not be mixed in some cases.

In this specification, an "end" of a component indicates a leading end of the component or a part which forms the outline of the component when the component is viewed in one direction. Meanwhile, an "end portion" of a component indicates a part which includes an "end" of the component and its surroundings.

In this specification, a passage member indicates walls and the like which form a path by surrounding the path. A path indicates a space through which a target passes. The exhaust passage member indicates walls or the like which form the exhaust path by surrounding the exhaust path. The exhaust path indicates a space through which exhaust gas passes.

In this specification, the path length of any part of the exhaust path 69 indicates the length of a line passing the center of the exhaust path. Furthermore, the path length in the expansion chamber in the muffler member 67 is the length of the path connecting the center of the inflow port of the expansion chamber with the center of the outflow port of the expansion chamber in the shortest distance.

In this specification, an inclination angle of a linear line A with respect to a direction B indicates a smaller angle formed by the linear line A and the direction B.

In this specification, a direction along a direction A is not limited to a direction in parallel to the direction A. The direction along the direction A includes a direction tilted by +45 to -45 degrees with respect to the direction A. This definition is applied to cases where a linear line is along the direction A. The direction A does not indicate any specific direction. The direction A may be the horizontal direction or the front-rear direction.

In this specification, when a component A and a component B are side by side in a direction X, the following case is indicated. The component A and the component B are provided to be on a linear line along the direction X. The component A and the component B may or may not be arranged so that a linear line in parallel to the direction X passes through the components.

In this specification, when a component A is provided forward of a component B, the following case is indicated. The component A is provided in front of a plane which passes the frontmost end of the component B and is orthogonal to the front-rear direction. The component A and the component B may or may not be arranged so that a linear line in parallel to the front-rear direction passes through the components. This definition is applicable to directions other than the front-rear direction. Furthermore, this definition is applicable not only to components but also to a part of a component, a linear line, and a plane.

In this specification, when a component A is provided in front of a component B, the entirety of the component A is provided in front of a part of the front surface of the component B, which faces the component A. In this regard, the component A and the component B are arranged so that a linear line in parallel to the front-rear direction passes through the components. Furthermore, when viewed in the front-rear direction, the component B at least partially overlaps the entire component A. In regard to this definition, when a part of the front surface of the component B, which faces the component A, is the frontmost end of the component B, the component A is provided forward of the component B. When a part of the front surface of the component B, which faces the component A, is not the frontmost end of the component B, the component A may or may not be provided forward of the component B. This definition is applicable to directions other than the front-rear direction. Furthermore, this definition is applicable not only to components but also to a part of a component, a linear line, and a plane. The front surface of the component B indicates a surface which is visible when the component B is viewed from the front side. Depending on the shape of the component B, the front surface of the component B may be formed of a plurality of planes, rather than a single continuous plane.

In this specification, when a component A is provided in front of a component B when viewed in the left-right direction, the entirety of the component A is provided in front of the front surface of the component B when viewed in the left-right direction. In this regard, when viewed in the left-right direction, the component A and the component B are arranged so that a linear line in parallel to the front-rear direction passes through the components. In three dimensions, the component A and the component B may or may not be arranged so that a linear line in parallel to the front-rear direction passes through the components. This definition is applicable to directions other than the front-rear direction. Furthermore, this definition is applicable not only to components but also to a part of a component, a linear line, and a plane.

In this specification, when a component A is provided between a component B and a component C when viewed in the left-right direction, the following state is indicated. To begin with, a case where the component B and the component C are side by side in the front-rear direction when viewed in the left-right direction will be explained. A line segment which is the uppermost one of line segments connecting points on the outline of the component B with points on the outline of the component C when viewed in the left-right direction is referred to as a line segment LU. Furthermore, a line segment which is the lowermost one of line segments connecting the points on the outline of the component B with the points on the outline of the component C when viewed in the left-right direction is referred to as a line segment LD. The state above is a state in which, when viewed in the left-right direction, the component A is in a quadrangular region having the line segments LU and LD as two sides and does not overlap the components B and C. Subsequently, a case where the component B and the component C are side by side in the up-down direction when viewed in the left-right direction will be explained. A line segment which is the leftmost one of line segments connecting points on the outline of the component B with points on the outline of the component C when viewed in the left-right direction is referred to as a line segment LL. Furthermore, a line segment which is the rightmost one of line segments connecting points on the outline of the component B with points on the outline of the component C when viewed in the left-right direction is referred to as a line segment line segment LR. The state is a state in which, when viewed in the left-right direction, the component A is in a quadrangular region having the line segments LL and LR as two sides and does not overlap the components B and C. This definition is applicable to cases where the viewing direction is not the left-right direction. Furthermore, this definition is applicable not only to components but also to a part of a component, a linear line, and a plane.

### [Reference Signs List]

- 1: motorcycle (straddled vehicle)
- 2: front wheel unit
- 3: rear wheel unit
- 4: vehicle body frame
- 11: engine unit
- 20, 520: engine main body
- 20a: crankcase member
- 20b: cylinder portion
- 21: crankcase
- 22a: cylinder hole
- 27: crankshaft
- 30: combustion chamber
- 34: internal exhaust passage member
- 34b, 534b: exhaust port
- 45: oil filter
- 47U: (47) upstream sub-catalyst
- 47D: (47) downstream sub-catalyst
- 60: exhaust device
- 61: upstream exhaust passage member
- 61a: upstream bended portion
- 62, 362: catalyst portion
- 62a: main catalyst
- 62b: cylindrical part
- 63: downstream collective exhaust passage member
- 64, 64A, 64B, 264: independent exhaust passage member
- 65, 265, 565: upstream collective exhaust passage member
- 66: downstream exhaust passage member
- 66a: downstream bended portion
- 67: muffler member
- 67a: atmosphere discharge port
- 69: exhaust path
- 362c: catalyst protector portion
- 430: double-walled pipe (multi-walled pipe)
- 430a: inner pipe
- 430b: outer pipe
- 534S1: internal independent exhaust passage member
- 534S2: internal collective exhaust passage member

## Claims

1. A straddled vehicle comprising:
a vehicle body frame (4);
an engine unit (11) supported by the vehicle body frame (4); and
a front wheel unit (2) including at least one front wheel,
the engine unit (11) including:
an engine main body (20, 520) including cylinder holes (22a) and combustion chambers (30), the cylinder holes (22a) being side by side in a vehicle left-right direction, each of the combustion chambers (30) being partially formed by the cylinder hole (22a), the engine main body (20, 520) being supported by the vehicle body frame (4) and provided behind the front wheel unit (2) in a vehicle front-rear direction, and at least one exhaust port (34b, 534b) communicating with the combustion chambers (30) being formed in a front surface of the engine main body (20, 520) ; and
an exhaust device (60) connected to the at least one exhaust port (34b, 534b) of the engine main body (20, 520) and including an atmosphere discharge port (67a) through which the exhaust gas is discharged to the atmosphere,
the exhaust device (60) including:
a catalyst portion (62, 362) including a main catalyst (62a) which is configured to purify the exhaust gas discharged from the combustion chambers (30) most in exhaust paths (69) from the combustion chambers (30) to the atmosphere discharge port (67a), the length of the catalyst portion (62, 362) in a flow direction of the exhaust gas being identical to the length of the main catalyst (62a) in the flow direction of the exhaust gas, at least a part of the catalyst portion (62, 362) being provided between the engine main body (20, 520) and the front wheel unit (2) when viewed in the left-right direction, and the flow direction of the exhaust gas flowing in the catalyst portion (62, 362) being along a vehicle up-down direction;
an upstream exhaust passage member (61) which includes an upstream bended portion (61a) by which the flow direction of the exhaust gas flowing in the upstream bended portion (61a) is changed from a direction along the front-rear direction to a direction along the up-down direction when viewed in the left-right direction, and an upstream end of the upstream exhaust passage member (61) being connected to the at least one exhaust port (34b, 534b) of the engine main body (20, 520), the upstream exhaust passage member (61) including an upstream collective exhaust passage member (65, 565) which has a downstream end connected to an upstream end of the catalyst portion (62, 362);
an upstream oxygen sensor which is provided in the upstream collective exhaust passage member and is configured to detect the oxygen density in exhaust gas in the upstream collective exhaust passage member, and
a downstream collective exhaust passage member (63) which includes:
(i) a downstream exhaust passage member (66) which includes a downstream bended portion (66a) by which the flow direction of the exhaust gas flowing in the downstream bended portion (66a) is changed from a direction along the up-down direction to a direction along the front-rear direction when viewed in the left-right direction, an upstream end of the downstream exhaust passage member (66) being connected to a downstream end of the catalyst portion (62, 362); and
(ii) a muffler member (67) including the atmosphere discharge port (67a), the muffler member (67) being connected to a downstream end of the downstream exhaust passage member (66), and the muffler member (67) being configured to reduce noise generated by the exhaust gas;
the engine main body (20, 520) including:
internal exhaust passage members (34) which are connected to the respective combustion chambers (30) and have downstream ends in which the at least one exhaust port (34b) are formed,
**characterized in that**
independent exhaust passage members (64) are connected to the at least one exhaust port (34b) formed in the downstream ends of the internal exhaust passage members (34), respectively;
the upstream collective exhaust passage member (65) has an upstream end connected to the downstream ends of the independent exhaust passage members (64) and merges exhaust gas exhausted from the independent exhaust passage members (64);
the downstream ends of the independent exhaust passage members (64) are connected to an upstream end of the upstream bended portion (61a) which merges exhaust gas exhausted from the independent exhaust passage members (64);
the downstream end of the upstream bended portion is connected to an upstream end of a tapered portion which is tapered so that the diameter increases downward, and
a downstream end of the tapered portion is connected to an upstream end of the main catalyst (62a).

2. The straddled vehicle according to claim 1, wherein the engine main body (20, 520) is disposed so that the central axis (Cy) of each of the cylinder holes (22a) is along the up-down direction.

3. The straddled vehicle according to claim 1 or 2, wherein the engine main body (20, 520) includes, at a front surface, a plurality of exhaust ports (34b, 534b) which communicate with the combustion chambers (30), respectively.

4. The straddled vehicle according to any one of claims 1 to 3, wherein
the engine main body (20, 520) includes a crankshaft (27) having a central axis (Cr) which is along the left-right direction, and
the catalyst portion (62, 362) is provided forward of the central axis (Cr) of the crankshaft (27) in the front-rear direction.

5. The straddled vehicle according to claim 4, wherein
the engine main body (20, 520) includes:
a crankcase member (20a) which is provided at a lower part of the engine main body (20, 520) and includes the crankshaft (27); and
a cylinder portion (20b) which is connected to an upper end portion of the crankcase member (20a) and includes the cylinder holes (22a) and the combustion chambers (30), and
at least a part of the catalyst portion (62, 362) is provided in front of the crankcase member (20a) in the front-rear direction.

6. The straddled vehicle according to claim 4 or 5, wherein, when viewed in the left-right direction, at least a part of the catalyst portion (62, 362) is provided, in the front-rear direction, in front of a linear line (La2) which is orthogonal to the central axis (Cy) of each of the cylinder holes (22a) and passes the central axis (Cr) of the crankshaft (27).

7. The straddled vehicle according to any one of claims 1 to 6, wherein
the upstream exhaust passage member (61) is configured such that the upstream bended portion (61a) changes the flow direction of the exhaust gas flowing in the upstream bended portion (61a) from a direction along a forward direction to a direction along a downward direction, and
the downstream exhaust passage member (66) is configured such that the downstream bended portion (66a) changes the flow direction of the exhaust gas flowing in the downward bended portion from a direction along a downward direction to a direction along a rearward direction.

8. The straddled vehicle according to any one of claims 1 to 7, wherein the exhaust device (60) includes at least one downstream sub-catalyst (47, 47D), the least one downstream sub-catalyst (47, 47D) being provided in at least one of the downstream exhaust passage member (66) and the muffler member (67), the least one downstream sub-catalyst (47, 47D) being provided downstream of the downstream bended portion (66a) in the flow direction of the exhaust gas, and the least one downstream sub-catalyst (47, 47D) being configured to purify the exhaust gas.

9. The straddled vehicle according to any one of claims 1 to 8, wherein
the engine main body (20, 520) includes at least one internal exhaust passage member (34) connecting the combustion chambers (30) to the at least one exhaust port (34b, 534b), and
the exhaust device (60) includes at least one upstream sub-catalyst (47, 47U) which is provided in at least one of the at least one internal exhaust passage member (34) and the upstream exhaust passage member (61), the at least one upstream sub-catalyst (47, 47U) being provided upstream of the upstream bended portion (61a) in the flow direction of the exhaust gas, and the at least one upstream sub-catalyst (47, 47U) being configured to purify the exhaust gas.

10. The straddled vehicle according to any one of claims 1 to 9, wherein at least a part of the upstream exhaust passage member (61) is formed of a multi-walled pipe (430) which includes an inner pipe (430a) and at least one outer pipe (430b) covering the inner pipe (430a).

11. The straddled vehicle according to any one of claims 1 to 10, wherein the catalyst portion (62, 362) includes:
a cylindrical part (62b) which houses the main catalyst (62a) and is connected to the downstream end of the upstream exhaust passage member (61) and the upstream end of the downstream exhaust passage member (66); and
a catalyst protector portion (362c) arranged to cover at least a part of the outer surface of the cylindrical part (62b).

12. The straddled vehicle according to any one of claims 1 to 11, wherein
the engine main body (20, 520) includes an oil filter (45) at a front portion, and
the exhaust device (60) and the oil filter (45) are arranged such that, when the exhaust device (60) and the oil filter (45) are viewed from a front side in the front-rear direction, the oil filter (45) is at least partially exposed.

## Patentansprüche

1. Ein Grätschsitzfahrzeug, das folgende Merkmale aufweist:
einen Fahrzeugkörperrahmen (4);
eine Motoreinheit (11), die von dem Fahrzeugkörperrahmen (4) getragen wird;
eine Vorderradeinheit (2), die zumindest ein Vorderrad umfasst,
wobei die Motoreinheit (11) folgende Merkmale umfasst:
einen Motorhauptkörper (20, 520), der Zylinderlöcher (22a) und Verbrennungskammern (30), wobei sich die Zylinderlöcher (22a) in einer Links-Rechts-Richtung des Fahrzeugs nebeneinander befinden, wobei jede der Verbrennungskammern (30) teilweise von dem das Zylinderloch (22a) gebildet ist, wobei der Motorhauptkörper (20, 520) von dem Fahrzeugkörperrahmen (4) getragen wird und hinter der Vorderradeinheit (2) in einer Vorne-Hinten-Richtung des Fahrzeugs vorgesehen ist, sowie einen Auslasskanal (34b, 534b) umfasst, der mit den Verbrennungskammern (30) kommuniziert, die in einer Vorderoberfläche des Motorhauptkörpers (20, 520) gebildet sind; und
eine Auslassvorrichtung (60), die mit dem zumindest einen Auslasskanal (34b, 534b) des Motorhauptkörpers (20, 520) verbunden ist und einen Atmosphärenausströmkanal (67a) umfasst, durch den das Abgas in die Atmosphäre ausgeströmt wird,
wobei die Auslassvorrichtung (60) folgende Merkmale umfasst:
einen Katalysatorabschnitt (62, 362), der einen Hauptkatalysator (62a) umfasst, der dazu ausgebildet ist, das Abgas zu reinigen, das von den Verbrennungskammern (30) größtenteils in Auslasswegen (69) von den Verbrennungskammern (30) in den Atmosphärenausströmkanal (67a) ausgeströmt wird, wobei die Länge des Katalysatorabschnitts (62, 362) in einer Strömungsrichtung des Abgases identisch ist mit der Länge des Hauptkatalysators (62a) in der Strömungsrichtung des Abgases, wobei zumindest ein Teil des Katalysatorabschnitts (62, 362) bei Betrachtung in der Links-Rechts-Richtung zwischen dem Motorhauptkörper (20, 520) und der Vorderradeinheit (2) vorgesehen ist und wobei die Strömungsrichtung des Abgases, das in dem Katalysatorabschnitt (62, 362) strömt, entlang einer Auf-Ab-Richtung des Fahrzeugs ist;
ein stromaufwärtiges Auslassdurchgangsbauglied (61), das einen stromaufwärtigen gebogenen Abschnitt (61a) umfasst, durch den die Strömungsrichtung des Abgases, das in dem stromaufwärtigen gebogenen Abschnitt (61a) strömt, bei Betrachtung in der Links-Rechts-Richtung von einer Richtung entlang der Vorne-Hinten-Richtung zu einer Richtung entlang der Auf-Ab-Richtung verändert wird, und wobei ein stromaufwärtiges Ende des stromaufwärtigen Auslassdurchgangsbauglieds (61) mit dem zumindest einen Auslasskanal (34b, 534b) des Motorhauptkörpers (20, 520) verbunden ist, wobei das stromaufwärtige Auslassdurchgangsbauglied (61) ein stromaufwärtiges Sammelauslassdurchgangsbauglied (65, 565) umfasst, das ein stromabwärtiges Ende aufweist, das mit einem stromaufwärtigen Ende des Katalysatorabschnitts (62, 362) verbunden ist;
einen stromaufwärtigen Sauerstoffsensor, der in dem stromaufwärtigen Sammelauslassdurchgangsbauglied vorgesehen ist und dazu ausgebildet ist, die Sauerstoffdichte in Abgas in dem stromaufwärtigen Sammelauslassdurchgangsbauglied zu erfassen, und
ein stromabwärtiges Sammelauslassdurchgangsbauglied (63), das folgende Merkmale umfasst:
(i) ein stromabwärtiges Auslassdurchgangsbauglied (66), das einen stromabwärtigen gebogenen Abschnitt (66a) umfasst, durch den die Strömungsrichtung des Abgases, das in dem stromabwärtigen gebogenen Abschnitt (66a) strömt, bei Betrachtung in der Links-Rechts-Richtung von einer Richtung entlang der Auf-Ab-Richtung zu einer Richtung entlang der Vorne-Hinten-Richtung verändert wird, wobei ein stromaufwärtiges Ende des stromabwärtigen Auslassdurchgangsbauglieds (66) mit einem stromabwärtigen Ende des Katalysatorabschnitts (62, 362) verbunden ist; und
(ii) ein Schalldämpfbauglied (67), das den Atmosphärenausströmkanal (67a) umfasst, wobei das Schalldämpfbauglied (67) mit einem stromabwärtigen Ende des stromabwärtigen Auslassdurchgangsbauglieds (66) verbunden ist und wobei das Schalldämpfbauglied (67) dazu ausgebildet ist, ein durch das Abgas erzeugtes Geräusch zu reduzieren;
wobei der Motorhauptkörper (20, 520) folgende Merkmale umfasst:
Innenauslassdurchgangsbauglieder (34), die mit den jeweiligen Verbrennungskammern (30) verbunden sind und stromabwärtige Enden aufweisen, in denen der zumindest eine Auslasskanal (34b) gebildet ist,
**dadurch gekennzeichnet, dass**
unabhängige Auslassdurchgangsbauglieder (64) mit dem zumindest einen Auslasskanal (34b) verbunden sind, der in den jeweiligen stromabwärtigen Enden der Innenauslassdurchgangsbauglieder (34) gebildet ist;
das stromaufwärtige Sammelauslassdurchgangsbauglied (65) ein stromaufwärtiges Ende aufweist, das mit den stromabwärtigen Enden der unabhängigen Auslassdurchgangsbauglieder (64) verbunden ist und Abgas zusammenführt, das aus den unabhängigen Auslassdurchgangsbaugliedern (64) ausgelassen wird;
die stromabwärtigen Enden der unabhängigen Auslassdurchgangsbauglieder (64) mit einem stromaufwärtigen Ende des stromaufwärtigen gebogenen Abschnitts (61a) verbunden sind, der Abgas zusammenführt, das aus den unabhängigen Auslassdurchgangsbaugliedern (64) ausgelassen wird;
das stromabwärtige Ende des stromaufwärtigen gebogenen Abschnitts mit einem stromaufwärtigen Ende eines sich verjüngenden Abschnitts verbunden ist, der sich derart verjüngt, dass der Durchmesser nach unten zunimmt, und
ein stromabwärtiges Ende des sich verjüngenden Abschnitts mit einem stromaufwärtigen Ende des Hauptkatalysators (62a) verbunden ist.

2. Das Grätschsitzfahrzeug gemäß Anspruch 1, bei dem der Motorhauptkörper (20, 520) derart angeordnet ist, dass die Mittelachse (Cy) jedes der Zylinderlöcher (22a) entlang der Auf-Ab-Richtung verläuft.

3. Das Grätschsitzfahrzeug gemäß Anspruch 1 oder 2, bei dem der Motorhauptkörper (20, 520) an einer Vorderoberfläche eine Mehrzahl von Auslasskanälen (34b, 534b) umfasst, die mit den jeweiligen Verbrennungskammern kommunizieren.

4. Das Grätschsitzfahrzeug gemäß einem der Ansprüche 1 bis 3, bei dem
der Motorhauptkörper (20, 520) eine Kurbelwelle (27) mit einer Mittelachse (Cr) umfasst, die entlang der Links-Rechts-Richtung verläuft, und
der Katalysatorabschnitt (62, 362) in der Vorne-Hinten-Richtung vor der Mittelachse (Cr) der Kurbelwelle (27) vorgesehen ist.

5. Das Grätschsitzfahrzeug gemäß Anspruch 4, bei dem
der Motorhauptkörper (20, 520) folgende Merkmale umfasst:
ein Kurbelgehäusebauglied (20a), das an einem unteren Teil des Motorhauptkörpers (20, 520) vorgesehen ist und die Kurbelwelle (27) umfasst; und
einen Zylinderabschnitt (20b), der mit einem oberen Endabschnitt des Kurbelgehäusebauglieds (20a) verbunden ist und die Zylinderlöcher (22a) und die Verbrennungskammern (30) umfasst, und
zumindest ein Teil des Katalysatorabschnitts (62, 362) in der Vorne-Hinten-Richtung vor dem Kurbelgehäusebauglied (20a) vorgesehen ist.

6. Das Grätschsitzfahrzeug gemäß Anspruch 4 oder 5, bei dem bei Betrachtung in der Links-Rechts-Richtung zumindest ein Teil des Katalysatorabschnitts (62, 362) in der Vorne-Hinten-Richtung vor einer linearen Linie (La2) vorgesehen ist, die orthogonal zu der Mittelachse (Cy) jedes der Zylinderlöcher (22a) ist und die Mittelachse (Cr) der Kurbelwelle (27) passiert.

7. Das Grätschsitzfahrzeug gemäß einem der Ansprüche 1 bis 6, bei dem
das stromaufwärtige Auslassdurchgangsbauglied (61) derart ausgebildet ist, dass der stromaufwärtigen gebogene Abschnitt (61a) die Strömungsrichtung des Abgases, das in dem stromaufwärtigen gebogenen Abschnitt (61a) strömt, von einer Richtung entlang einer Richtung nach vorne zu einer Richtung entlang einer Richtung nach unten ändert, und
das stromabwärtige Auslassdurchgangsbauglied (66) derart ausgebildet ist, dass der stromabwärtige gebogene Abschnitt (66a) die Strömungsrichtung des Abgases, das in dem stromabwärtigen gebogenen Abschnitt strömt, von einer Richtung entlang einer Richtung nach unten zu einer Richtung entlang einer Richtung nach hinten ändert.

8. Das Grätschsitzfahrzeug gemäß einem der Ansprüche 1 bis 7, bei dem die Auslassvorrichtung (60) zumindest einen stromabwärtigen Unterkatalysator (47, 47D) umfasst, wobei der zumindest eine stromabwärtige Unterkatalysator (47, 47D) in dem stromabwärtigen Auslassdurchgangsbauglied (66) und/oder dem Schalldämpfbauglied (67) vorgesehen ist, wobei der zumindest eine stromabwärtige Unterkatalysator (47, 47D) stromabwärts bezüglich des stromabwärtigen gebogenen Abschnitt (66a) in der Strömungsrichtung des Abgases vorgesehen ist und der zumindest eine stromabwärtige Unterkatalysator (47, 47D) dazu ausgebildet ist, das Abgas zu reinigen.

9. Das Grätschsitzfahrzeug gemäß einem der Ansprüche 1 bis 8, bei dem
der Motorhauptkörper (20, 520) zumindest ein Innenauslassdurchgangsbauglied (34) umfasst, das die Verbrennungskammern (30) mit dem zumindest einen Auslasskanal (34b, 534b) verbindet, und
die Auslassvorrichtung (60) zumindest einen stromaufwärtigen Unterkatalysator (47, 47U) umfasst, der in dem zumindest einen Innenauslassdurchgangsbauglied (34) und/oder dem stromaufwärtigen Auslassdurchgangsbauglied (61) vorgesehen ist, wobei der zumindest eine stromaufwärtige Unterkatalysator (47, 47U) stromaufwärts bezüglich des stromaufwärtigen gebogenen Abschnitt (61a) in der Strömungsrichtung des Abgases vorgesehen ist und wobei der zumindest eine stromaufwärtige Unterkatalysator (47, 47U) dazu ausgebildet ist, das Abgas zu reinigen.

10. Das Grätschsitzfahrzeug gemäß einem der Ansprüche 1 bis 9, bei dem zumindest ein Teil des stromaufwärtigen Auslassdurchgangsbauglieds (61) aus einem mehrwandigen Rohr (430) gebildet ist, dass ein Innenrohr (430a) und zumindest ein Außenrohr (430b) umfasst, das das Innenrohr (430a) bedeckt.

11. Das Grätschsitzfahrzeug gemäß einem der Ansprüche 1 bis 10, bei dem der Katalysatorabschnitt (62, 362) folgende Merkmale umfasst:
ein zylindrisches Teil (62b), das den Hauptkatalysator (62a) unterbringt und mit dem stromabwärtigen Ende des stromaufwärtigen Auslassdurchgangsbauglieds (61) und dem stromaufwärtigen Ende des stromabwärtigen Auslassdurchgangsbauglieds (66) verbunden ist; und
einen Katalysatorschutzabschnitt (362c), der dahin gehend angebracht ist, zumindest einen Teil der Außenoberfläche des zylindrischen Teils (62b) zu bedecken.

12. Das Grätschsitzfahrzeug gemäß einem der Ansprüche 1 bis 11, bei dem
der Motorhauptkörper (20, 520) ein Ölfilter (45) an einem vorderen Abschnitt umfasst, und
die Auslassvorrichtung (60) und das Ölfilter (45) derart angebracht sind, dass das Ölfilter (45) bei Betrachtung der Auslassvorrichtung (60) und des Ölfilters (45) von einer Vorderseite in der Vorne-Hinten-Richtung zumindest teilweise freiliegt.

## Revendications

1. Véhicule à selle, comprenant:
un châssis de carrosserie de véhicule (4);
une unité de moteur (11) supportée par le châssis de carrosserie de véhicule (4); et
une unité de roue avant (2) comportant au moins une roue avant, l'unité de moteur (11) comportant:
un corps principal de moteur (20, 520) comportant des trous de cylindre (22a) et des chambres de combustion (30), les trous de cylindre (22a) se trouvant côte à côte dans une direction gauche-droite du véhicule, chacune des chambres de combustion (30) étant partiellement formée par le trou de cylindre (22a), le corps principal de moteur (20, 520) étant supporté par le châssis de carrosserie de véhicule (4) et prévu derrière l'unité de roue avant (2) dans une direction avant-arrière du véhicule, et au moins un orifice d'échappement (34b, 534b) communiquant avec les chambres de combustion (30) étant formé dans une surface avant du corps principal de moteur (20, 520); et
un dispositif d'échappement (60) connecté à l'au moins un orifice d'échappement (34b, 534b) du corps principal de moteur (20, 520) et comportant un orifice de décharge à l'atmosphérique (67a) à travers lequel les gaz d'échappement sont évacués à l'atmosphère,
le dispositif d'échappement (60) comportant:
une partie de catalyseur (62, 362) comportant un catalyseur principal (62a) qui est configuré pour purifier les gaz d'échappement évacués des chambres de combustion (30) pour la plupart dans les trajets d'échappement (69) des chambres de combustion (30) à l'orifice de décharge à l'atmosphère (67a), la longueur de la partie de catalyseur (62, 362) dans une direction de circulation des gaz d'échappement étant identique à la longueur du catalyseur principal (62a) dans la direction de circulation des gaz d'échappement, au moins une portion de la partie de catalyseur (62, 362) étant prévue entre le corps principal de moteur (20, 520) et l'unité de roue avant (2), lorsque vue dans la direction gauche-droite, et la direction de circulation des gaz d'échappement circulant dans la partie de catalyseur (62, 362) étant une direction de haut en bas du véhicule;
un élément de passage d'échappement amont (61) qui comporte une partie courbée amont (61a) par laquelle la direction de circulation des gaz d'échappement circulant dans la partie courbée amont (61a) est changée d'une direction avant-arrière à une direction de haut en bas, lorsque vue dans la direction gauche-droite, et une extrémité amont de l'élément de passage d'échappement amont (61) étant connectée à au moins un orifice d'échappement (34b, 534b) du corps principal de moteur (20, 520), l'élément de passage d'échappement amont (61) comportant un élément de passage d'échappement collectif amont (65, 565) qui présente une extrémité aval connectée à une extrémité amont de la partie de catalyseur (62, 362);
un capteur d'oxygène amont qui est prévu dans l'élément de passage d'échappement collectif amont et est configuré pour détecter la densité d'oxygène dans les gaz d'échappement dans l'élément de passage d'échappement collectif amont, et
un élément de passage d'échappement collectif aval (63) qui comporte:
(i) un élément de passage d'échappement aval (66) qui comporte une partie courbée aval (66a) par laquelle la direction de circulation des gaz d'échappement circulant dans la partie courbée aval (66a) est changée d'une direction de haut en bas à une direction avant-arrière, lorsque vue dans la direction gauche-droite, une extrémité amont de l'élément de passage d'échappement aval (66) étant connectée à une extrémité aval de la partie de catalyseur (62, 362); et
(ii) un élément de silencieux (67) comportant l'orifice de décharge à l'atmosphère (67a), l'élément de silencieux (67) étant connecté à une extrémité aval de l'élément de passage d'échappement aval (66), et l'élément de silencieux (67) étant configuré pour réduire le bruit généré par les gaz d'échappement; le corps principal de moteur (20, 520) comportant:
des éléments de passage d'échappement internes (34) qui sont connectés aux chambres de combustion respectives (30) et présentent des extrémités aval dans lesquelles est formé l'au moins un orifice d'échappement (34b),
**caractérisé par le fait que**
des éléments de passage d'échappement indépendants (64) sont connectés à l'au moins un orifice d'échappement (34b) formé dans les extrémités aval respectivement des éléments de passage d'échappement internes (34);
l'élément de passage d'échappement collectif amont (65) présente une extrémité amont connectée aux extrémités aval des éléments de passage d'échappement indépendants (64) et fusionne les gaz d'échappement évacués des éléments de passage d'échappement indépendants (64);
les extrémités aval des éléments de passage d'échappement indépendants (64) sont connectées à une extrémité amont de la partie courbée amont (61a) qui fusionne les gaz d'échappement évacués des éléments de passage d'échappement indépendants (64);
l'extrémité aval de la partie courbée amont est connectée à une extrémité amont d'une partie effilée qui est effilée de sorte que le diamètre augmente vers le bas, et
une extrémité aval de la partie effilée est connectée à une extrémité amont du catalyseur principal (62a).

2. Véhicule à selle selon la revendication 1, dans lequel le corps principal de moteur (20, 520) est disposé de sorte que l'axe central (Cy) de chacun des trous de cylindre (22a) se trouve dans la direction de haut en bas.

3. Véhicule à selle selon la revendication 1 ou 2, dans lequel le corps principal de moteur (20, 520) comporte, dans une surface avant, une pluralité d'orifices d'échappement (34b, 534b) qui communiquent respectivement avec les chambres de combustion (30).

4. Véhicule à selle selon l'une quelconque des revendications 1 à 3, dans lequel
le corps principal de moteur (20, 520) comporte un vilebrequin (27) présentant un axe central (Cr) qui se situe dans la direction gauche-droite, et
la partie de catalyseur (62, 362) est prévue en avant de l'axe central (Cr) du vilebrequin (27) dans la direction avant-arrière.

5. Véhicule à selle selon la revendication 4, dans lequel le corps principal de moteur (20, 520) comporte:
un élément de carter (20a) qui est prévu dans une partie inférieure du corps principal de moteur (20, 520) et comporte le vilebrequin (27); et
une partie de cylindre (20b) qui est connectée à une partie d'extrémité supérieure de l'élément de carter (20a) et comporte les trous de cylindre (22a) et les chambres de combustion (30), et
au moins une portion de la partie de catalyseur (62, 362) est prévue devant l'élément de carter (20a) dans la direction avant-arrière.

6. Véhicule à selle selon la revendication 4 ou 5, dans lequel, lorsque vue dans la direction gauche-droite, au moins une portion de la partie de catalyseur (62 362) est prévue, dans la direction avant-arrière, devant une ligne linéaire (La2) qui est orthogonale à l'axe central (Cy) de chacun des trous de cylindre (22a) et passe par l'axe central (Cr) du vilebrequin (27).

7. Véhicule à selle selon l'une quelconque des revendications 1 à 6, dans lequel
l'élément de passage d'échappement amont (61) est configuré de sorte que la partie courbée amont (61a) change la direction de circulation des gaz d'échappement circulant dans la partie courbée amont (61a) d'une direction en avant à une direction vers le bas, et
l'élément de passage d'échappement aval (66) est configuré de sorte que la partie courbée aval (66a) change la direction de circulation des gaz d'échappement circulant dans la partie courbée vers le bas d'une direction vers le bas à une direction en arrière.

8. Véhicule à selle selon l'une quelconque des revendications 1 à 7, dans lequel le dispositif d'échappement (60) comporte au moins un sous-catalyseur aval (47, 47D), au moins un sous-catalyseur aval (47, 47D) étant prévu dans au moins l'un parmi l'élément de passage d'échappement aval (66) et l'élément de silencieux (67), l'au moins un sous-catalyseur aval (47, 47D) étant prévu en aval de la partie courbée aval (66a) dans la direction de circulation des gaz d'échappement, et l'au moins un sous-catalyseur aval (47, 47D) étant configuré pour purifier les gaz d'échappement.

9. Véhicule à selle selon l'une quelconque des revendications 1 à 8, dans lequel
le corps principal de moteur (20, 520) comporte au moins un élément de passage d'échappement interne (34) connectant les chambres de combustion (30) à l'au moins un orifice d'échappement (34b, 534b), et
le dispositif d'échappement (60) comporte au moins un sous-catalyseur amont (47, 47U) qui est prévu dans au moins l'un parmi l'au moins un élément de passage d'échappement interne (34) et l'élément de passage d'échappement amont (61), l'au moins un sous-catalyseur amont (47, 47U) étant prévu en amont de la partie courbée amont (61a) dans la direction de circulation des gaz d'échappement, et l'au moins un sous-catalyseur amont (47, 47U) étant configuré pour purifier les gaz d'échappement.

10. Véhicule à selle selon l'une quelconque des revendications 1 à 9, dans lequel au moins une partie de l'élément de passage d'échappement amont (61) est formée d'un tuyau à parois multiples (430) qui comporte un tuyau intérieur (430a) et au moins au moins un tuyau extérieur (430b) recouvrant le tuyau intérieur (430a).

11. Véhicule à selle selon l'une quelconque des revendications 1 à 10, dans lequel la partie de catalyseur (62, 362) comporte:
une partie cylindrique (62b) qui abrite le catalyseur principal (62a) et est connectée à l'extrémité aval de l'élément de passage d'échappement amont (61) et à l'extrémité amont de l'élément de passage d'échappement aval (66); et
une partie de protecteur de catalyseur (362c) disposée de manière à recouvrir au moins une partie de la surface extérieure de la partie cylindrique (62b).

12. Véhicule à selle selon l'une quelconque des revendications 1 à 11, dans lequel
le corps principal de moteur (20, 520) comporte un filtre à huile (45) dans une partie avant, et
le dispositif d'échappement (60) et le filtre à huile (45) sont disposés de sorte que, lorsque le dispositif d'échappement (60) et le filtre à huile (45) sont vus d'un côté avant dans la direction avant-arrière, le filtre à huile (45) est au moins partiellement exposé.
